(19) **Europäisches Patentamt / European Patent Office / Office européen des brevets**

(11) **EP 2 977 956 B1**

(12) **EUROPEAN PATENT SPECIFICATION**

(45) Date of publication and mention
of the grant of the patent:
**11.01.2017 Bulletin 2017/02**

(51) Int Cl.:
*G06T 7/00* (2017.01)      *G06K 9/00* (2006.01)

(21) Application number: **15175108.8**

(22) Date of filing: **02.07.2015**

(54) **METHOD, APPARATUS AND DEVICE FOR SEGMENTING AN IMAGE**

VERFAHREN, VORRICHTUNG UND EINRICHTUNG ZUR SEGMENTIERUNG EINES BILDES

PROCÉDÉ, APPAREIL ET DISPOSITIF DE SEGMENTATION D'UNE IMAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.07.2014 CN 201410353140**

(43) Date of publication of application:
**27.01.2016 Bulletin 2016/04**

(73) Proprietor: **Xiaomi Inc.**
**Beijing 100085 (CN)**

(72) Inventors:
• **WANG, Lin**
**Haidian District Beijing 100085 (CN)**
• **XU, Xiaozhou**
**Haidian District Beijing 100085 (CN)**
• **CHEN, Zhijun**
**Haidian District Beijing 100085 (CN)**

(74) Representative: **Sadler, Peter Frederick**
**Reddie & Grose LLP**
**16 Theobalds Road**
**London WC1X 8PL (GB)**

(56) References cited:
• **HAI XIN ET AL: "Human head-shoulder segmentation", AUTOMATIC FACE&GESTURE RECOGNITION AND WORKSHOPS (FG 2011), 2011 IEEE INTERNATIONAL CONFERENCE ON, IEEE, 21 March 2011 (2011-03-21), pages 227-232, XP031869405, DOI: 10.1109/FG.2011.5771402 ISBN: 978-1-4244-9140-7**
• **STAUFFER C ET AL: "Adaptive background mixture models for real-time tracking", PROCEEDINGS OF THE 1999 IEEE COMPUTER SOCIETY CONFERENCE ON COMPUTER VISION AND PATTERN RECOGNITION, JUNE 23-25, 1999; FORT COLLINS, COLORADO, IEEE, THE INSTITUTE OF ELECTRICAL AND ELECTRONICS ENGINEERS, INC, US, vol. 2, 23 June 1999 (1999-06-23), pages 246-252, XP010347611, ISBN: 978-0-7695-0149-9**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

**TECHNICAL FIELD**

The present disclosure relates to the field of image processing technology, and more particularly, to a method, an apparatus and a device for segmenting image.

**BACKGROUND**

With the rapid growth of the amount of network multimedia information, a head-shoulder segmentation technology functioning as a special image segmentation technology has been developed in order to separate or distinguish the head and shoulder portion of a subject in an image from the background. It has been widely applied to scenarios such as background replacement in a video conference, capturing people via a front camera and capturing scenes via a rear camera on a mobile device.

In the related art, when performing head-shoulder segmentation of an image, the user is firstly instructed to select a first sample pixel of a head-shoulder foreground and a second sample pixel of a background; afterwards, a color feature vector of the first sample pixel and a color feature vector of the second sample pixel are calculated respectively to obtain a first color feature vector of the head-shoulder foreground and a second color feature vector of the background; then color modeling is respectively performed on the head-shoulder foreground and the background according to the first color feature vector and the second color feature vector to obtain a first color model and a second color module; and finally, the first color model and the second color module are employed to perform head-shoulder segmentation on the image to obtain a head-shoulder segmentation result.

In the process of achieving the present disclosure, it is found that the related art at least has the following defects:

the user needs to participate in the selection of the sample pixels during the image segmentation process; therefore, the user experience is poor; moreover, since the image segmentation is performed on the basis of the color feature vectors of the sample pixels only, the segmentation precision is poor.

The Article "Human head-shoulder segmentation by Hai Xin et al included in the IEEE conference on automatic face and gesture recognition, ISBN: 978-1-4244-9140-7, pages 227 to 232, describes an automatic head-shoulder segmentation method based on graft cut techniques. A shape constraint method is employed that uses a shape mask to determine, for a given collection of pixels, the probability of that collection of pixels belonging to the foreground or background of the image. Each group of pixels is assigned to the foreground, background or an unknown category and Gaussian mixture models are built for the foreground and background respectively, and used to compute the probabilities of each of the unknown super pixels appearing in the foreground and background.

SUMMARY

In order to overcome the problems in the related art, the present disclosure provides a method, an apparatus, and a device for segmenting an image.

According to a first aspect of embodiments of the present disclosure, there is provided a method for segmenting an image, including:

calculating the a priori probability of appearing in a head-shoulder foreground for each pixel in an image having a preset size according to a positioning result of exterior facial contour points;

selecting head-shoulder foreground sample pixels and background sample pixels from an image to be segmented according to the a priori probability, and a head-shoulder foreground probability threshold and a background probability threshold set in advance;

calculating a first color likelihood probability of the head-shoulder foreground and a second color likelihood probability of the background according to color feature vectors of the head-shoulder foreground sample pixels and color feature vectors of the background sample pixels;

calculating a first a posteriori probability of the head-shoulder foreground and a second a posteriori probability of the background according to the a priori probability, the first color likelihood probability and the second color likelihood probability; and

performing head-shoulder segmentation on the image to be segmented according to the first a posteriori probability and the second a posteriori probability.

The selecting the head-shoulder foreground sample pixels and the background sample pixels from the image to be segmented according to the a priori probability, and the head-shoulder foreground probability threshold and the background probability threshold set in advance includes:

identifying a gender of the face in the image to be segmented to obtain a gender identification result;
determining an a priori probability corresponding to the image to be segmented according to the gender identification result;
with respect to each pixel in the image to be segmented, determining whether the a priori probability of the pixel is larger than the head-shoulder foreground probability threshold; if the a priori probability of the pixel is larger than the head-shoulder foreground probability threshold, determining the pixel as the foreground sample pixel; and
with respect to each pixel in the image to be segmented, determining whether the a priori probability of the pixel is smaller than the background probability threshold; if the a priori probability of the pixel is smaller than the background probability threshold, determining the pixel as the background sample pixel.

Optionally, the calculating the a priori probability of appearing in the head-shoulder foreground for each pixel in the image having the preset size according to the positioning result of the exterior facial contour points includes:

selecting a preset number of frontal face images of females;
generating a head-shoulder calibrated image of each female frontal face image according to a head-shoulder foreground calibration result by the user on each female frontal face image;
positioning exterior facial contour characteristic points in each female frontal face image to obtain a positioning result;
performing alignment and size normalization on each head-shoulder calibrated image according to the positioning result of the exterior facial contour points to obtain a multiple of images having a preset size; and
with respect to the pixel at the same position in the multiple of images having the preset size, calculating the a priori probability of appearing in the head-shoulder foreground for the pixel according to the head-shoulder foreground calibration result.

Optionally, the calculating the a priori probability of appearing in the head-shoulder foreground for each pixel in the image having the preset size according to the positioning result of the exterior facial contour points includes:

selecting a preset number of frontal face images of males;
generating a head-shoulder calibrated image of each male frontal face image according to a head-shoulder foreground calibration result by the user on each male frontal face image;
positioning exterior facial contour characteristic points in each male frontal face image to obtain a positioning result;
performing alignment and size normalization on each head-shoulder calibrated image according to the positioning result of the exterior facial contour points to obtain a multiple of images having a preset size; and
with respect to the pixel at the same position in the multiple of images having a preset size, calculating the a priori probability of appearing the head-shoulder foreground at the pixel according to the head-shoulder foreground calibration result.

Optionally, the a priori probability of appearing in the head-shoulder foreground for the pixel is calculated according to the head-shoulder foreground calibration result by applying a formula as follows:

$$P(I_{(x_i,y_i)} = 1) = \frac{\sum_{j=1}^{N} I_{(x_i,y_i)}^{j}}{N}$$

wherein $P(I_{(x_i,y_i)} = 1)$ refers to the a priori probability of appearing in the head-shoulder foreground for the pixel $(x_i, y_i)$, $I_{(x_i,y_i)}^{j} = 1$ refers to a calibration result of the pixel $(x_i, y_i)$ in the $j$th image, $I_{(x_i,y_i)}^{j} = 1$ indicates that the pixel $(x_i, y_i)$ in the $j$th image is calibrated as the head-shoulder foreground, $I_{(x_i,y_i)}^{j} = 0$ indicates that the pixel $(x_i, y_i)$ in the $j$th image is calibrated as the background, and N refers to the number of the frontal face images.

Optionally, the calculating the first color likelihood probability of the head-shoulder foreground and the second color likelihood probability of the background according to the color feature vectors of the head-shoulder foreground sample pixels and the color feature vectors of the background sample pixels applies a formula as follows:

$$P(\overline{(R,G,B)} \mid I_{(x_i,y_i)} = 1) = \sum_{j}^{N_F} w_j * \exp(-\frac{dist(\overline{(R,G,B)},\overline{(R_j,G_j,B_j)})}{2 * \beta_F})$$

$$P(\overline{(R,G,B)} \mid I_{(x_i,y_i)} = 0) = \sum_{j}^{N_B} w_j * \exp(-\frac{dist(\overline{(R,G,B)},\overline{(R_j,G_j,B_j)})}{2 * \beta_B})$$

wherein $\overline{(R_j,G_j,B_j)}$ refers to a color feature vector of the $j$th clustering center, $P(\overline{(R,G,B)} \mid I_{(x_i,y_i)} = 1)$ refers to the first color likelihood probability, $P(\overline{(R,G,B)} \mid I_{(x_i,y_i)} = 0)$ refers to the second color likelihood probability, $N_F$ refers to a number of the clustering centers of the head-shoulder foreground sample pixels, and $N_B$ refers to a number of the clustering centers of the background sample pixels; $dist(\overline{(R,G,B)},\overline{(R_j,G_j,B_j)})$ refers to the Euclidean distance from the color feature vector $\overline{(R,G,B)}$ to the clustering center $\overline{(R_j,G_j,B_j)}$, $w_j$ refers to a ratio of the number of the sample pixels of the $j$th clustering center to the number of total sample pixels, and $\beta$ refers to the mean Euclidean distance between the color feature vectors of different clustering centers, which are defined as follows:

$$\beta_F = \frac{2}{N_F(N_F-1)}\sum_{i=1}^{N_F}\sum_{j=1,j\neq i}^{N_F} dist(\overline{(R_i,G_i,B_i)},\overline{(R_j,G_j,B_j)})$$

$$\beta_B = \frac{2}{N_B(N_B-1)}\sum_{i=1}^{N_B}\sum_{j=1,j\neq i}^{N_B} dist(\overline{(R_i,G_i,B_i)},\overline{(R_j,G_j,B_j)})$$

Optionally, the calculating the a posteriori probability of the head-shoulder foreground and the a posteriori probability of the background according to the a priori probability, the first color likelihood probability and the second color likelihood probability applies a formula as follows:

$$P(I_{(x_i,y_i)} = 1 \mid \overline{(R,G,B)}) \propto P(I_{(x_i,y_i)} = 1) * P(\overline{(R,G,B)} \mid I_{(x_i,y_i)} = 1)$$

$$P(I_{(x_i,y_i)} = 0 \mid \overline{(R,G,B)}) \propto (1 - P(I_{(x_i,y_i)} = 1)) * P(\overline{(R,G,B)} \mid I_{(x_i,y_i)} = 0)$$

wherein $P(I_{(x_i,y_i)} = 1 \mid \overline{(R,G,B)})$ refers to the a posteriori probability of the head-shoulder foreground; and

$P(I_{(x_i,y_i)} = 0 \mid \overline{(R,G,B)})$ refers to the a posteriori probability of the background.

According to a second aspect of embodiments of the present disclosure, there is provided an apparatus for segmenting an image, including:

an a priori probability calculation module configured to calculate an a priori probability of appearing in a head-shoulder foreground for each pixel in an image having a preset size according to a positioning result of exterior facial contour points;

a sample pixel selection module configured to select head-shoulder foreground sample pixels and background sample pixels from an image to be segmented according to the a priori probability, and a head-shoulder foreground probability threshold and a background probability threshold set in advance;

a color likelihood probability calculation module configured to calculate a first color likelihood probability of the head-shoulder foreground and a second color likelihood probability of the background according to color feature vectors of the head-shoulder foreground sample pixels and color feature vectors of the background sample pixels;

an a posteriori probability calculation module configured to calculate a first a posteriori probability of the head-shoulder foreground and a second a posteriori probability of the background according to the a priori probability, the first color likelihood probability and the second color likelihood probability; and

an image segmentation module configured to perform head-shoulder segmentation on the image to be segmented according to the first a posteriori probability and the second a posteriori probability.

The sample pixel selection module is configured to identify a gender of the face in the image to be segmented to obtain a gender identification result; determine an a priori probability corresponding to the image to be segmented according to the gender identification result; with respect to each pixel in the image to be segmented, determine whether the a priori probability of the pixel is larger than the head-shoulder foreground probability threshold; if the a priori probability of the pixel is larger than the head-shoulder foreground probability threshold, determine the pixel as the foreground sample pixel; and with respect to each pixel in the image to be segmented, determine whether the a priori probability of the pixel is smaller than the background probability threshold; if the a priori probability of the pixel is smaller than the background probability threshold, determine the pixel as the background sample pixel.

Optionally, the a priori probability calculation module is configured to select a preset number of frontal face images of females; generate a head-shoulder calibrated image of each female frontal face image according to a head-shoulder foreground calibration result by the user on each female frontal face image; position exterior facial contour characteristic points in each female frontal face image to obtain a positioning result; perform alignment and size normalization on each head-shoulder calibrated image according to the positioning result of the exterior facial contour points to obtain a multiple of images having a preset size; and with respect to the pixel at the same position in the multiple of images having the preset size, calculate the a priori probability of appearing in the head-shoulder foreground at the pixel according to the head-shoulder foreground calibration result.

Optionally, the a priori probability calculation module is configured to select a preset number of frontal face images of males; generate a head-shoulder calibrated image of each male frontal face image according to a head-shoulder foreground calibration result by the user on each male frontal face image; position exterior facial contour characteristic points in each male frontal face image to obtain a positioning result; perform alignment and size normalization on each head-shoulder calibrated image according to the positioning result of the exterior facial contour points to obtain a multiple of images having a preset size; and with respect to the pixel at the same position in the multiple of images having a preset size, calculate the a priori probability of appearing in the head-shoulder foreground at the pixel according to the head-shoulder foreground calibration result.

Optionally, the a priori probability calculation module calculates the a priori probability of appearing in the head-shoulder foreground at the pixel by applying a formula as follows:

$$P(I_{(x_i,y_i)}=1)=\frac{\sum_{j=1}^{N}I_{(x_i,y_i)}^{j}}{N}$$

wherein $P(I_{(x_i,y_i)}=1)$ refers to the a priori probability of appearing the head-shoulder foreground at the pixel $(x_i,y_i)$, $I_{(x_i,y_i)}^{j}=1$ refers to a calibration result of the pixel $(x_i,y_i)$ in the $j^{th}$ image, $I_{(x_i,y_i)}^{j}=1$ indicates that the pixel $(x_i,y_i)$ in the $j^{th}$ image is calibrated as the head-shoulder foreground, $I_{(x_i,y_i)}^{j}=0$ indicates that the pixel $(x_i,y_i)$ in the $j^{th}$ image is calibrated as the background, and N refers to the number of the frontal face images.

Optionally, the color likelihood probability calculation module calculates the first color likelihood probability of the head-shoulder foreground and the second color likelihood probability of the background by applying a formula as follows:

$$P(\overline{(R,G,B)} \mid I_{(x_i,y_i)} = 1) = \sum_j^{N_F} w_j * \exp(-\frac{dist(\overline{(R,G,B)},\overline{(R_j,G_j,B_j)})}{2*\beta_F})$$

$$P(\overline{(R,G,B)} \mid I_{(x_i,y_i)} = 0) = \sum_j^{N_B} w_j * \exp(-\frac{dist(\overline{(R,G,B)},\overline{(R_j,G_j,B_j)})}{2*\beta_B})$$

wherein $\overline{(R_j,G_j,B_j)}$ refers to a color feature vector of the $j$th clustering center, $P(\overline{(R,G,B)} \mid I_{(x_i,y_i)} = 1)$ refers to the first color likelihood probability, $P(\overline{(R,G,B)} \mid I_{(x_i,y_i)} = 0)$ refers to the second color likelihood probability, $N_F$ refers to a number of the clustering centers of the head-shoulder foreground sample pixels, and $N_B$ refers to a number of the clustering centers of the background sample pixels; $dist(\overline{(R,G,B)},\overline{(R_j,G_j,B_j)})$ refers to a Euclidean distance from the color feature vector $\overline{(R,G,B)}$ to the clustering center $\overline{(R_j,G_j,B_j)}$, $w_j$ refers to a ratio of the number of the sample pixels of the $j$th clustering center to the number of total sample pixels, and $\beta$ refers to the mean Euclidean distance between the color feature vectors of different clustering centers, which are defined as follows:

$$\beta_F = \frac{2}{N_F(N_F-1)} \sum_{i=1}^{N_F} \sum_{j=1,j\neq i}^{N_F} dist(\overline{(R_i,G_i,B_i)},\overline{(R_j,G_j,B_j)})$$

$$\beta_B = \frac{2}{N_B(N_B-1)} \sum_{i=1}^{N_B} \sum_{j=1,j\neq i}^{N_B} dist(\overline{(R_i,G_i,B_i)},\overline{(R_j,G_j,B_j)})$$

Optionally, the a posteriori probability calculation module calculates the a posteriori probability of the head-shoulder foreground and the a posteriori probability of the background by applying a formula as follows:

$$P(I_{(x_i,y_i)} = 1 \mid \overline{(R,G,B)}) \propto P(I_{(x_i,y_i)} = 1) * P(\overline{(R,G,B)} \mid I_{(x_i,y_i)} = 1)$$

$$P(I_{(x_i,y_i)} = 0 \mid \overline{(R,G,B)}) \propto (1 - P(I_{(x_i,y_i)} = 1)) * P(\overline{(R,G,B)} \mid I_{(x_i,y_i)} = 0)$$

wherein $P(I_{(x_i,y_i)} = 1 \mid \overline{(R,G,B)})$ refers to the a posteriori probability of the head-shoulder foreground; and

$P(I_{(x_i,y_i)} = 0 \mid \overline{(R,G,B)})$ refers to the a posteriori probability of the background.

According to a third aspect of embodiments of the present disclosure, there is provided a device for segmenting image, including:

a processor; and
a memory for storing instructions executable by the processor;

wherein the processor is configured to: calculate an a priori probability of appearing in a head-shoulder foreground for each pixel in an image having a preset size according to a positioning result of exterior facial contour points; select head-shoulder foreground sample pixels and background sample pixels in an image to be segmented according to the a priori probability, and a head-shoulder foreground probability threshold and a background probability threshold set in advance; calculate a first color likelihood probability of the head-shoulder foreground and a second color likelihood probability of the background according to color feature vectors of the head-shoulder foreground sample pixels and color feature vectors of the background sample pixels; calculate a first a posteriori probability of the head-shoulder foreground and a second a posteriori probability of the background according to the a priori probability, the first color likelihood probability and the second color likelihood probability; and perform head-shoulder segmentation on the image to be segmented according to the first a posteriori probability and the second a posteriori probability. The selecting the head-shoulder foreground sample pixels and the background sample pixels from the image to be segmented according to the a priori probability, and the head-shoulder foreground probability threshold and the background probability threshold set in advance includes: identifying a gender of the face in the image to be segmented to obtain a gender identification result; determining an a priori probability corresponding to the image to be segmented according to the gender identification result; with respect to each pixel in the image to be segmented, determining whether the a priori probability of the pixel is larger than the head-shoulder foreground probability threshold; if the a priori probability of the pixel is larger than the head-shoulder foreground probability threshold, determining the pixel as the foreground sample pixel; and with respect to each pixel in the image to be segmented, determining whether the a priori probability of the pixel is smaller than the background probability threshold; if the a priori probability of the pixel is smaller than the background probability threshold, determining the pixel as the background sample pixel.

The technical solutions provided by the embodiments of the present disclosure may include the following advantageous effects:

since the a priori probability of appearing in the head-shoulder foreground for each pixel in the image having a preset size is calculated according to the positioning result of the exterior facial contour points, and the head-shoulder foreground sample pixels and the background sample pixels are automatically selected on the basis of the a priori probability of the head-shoulder foreground, the object of not needing the user to participate in the process of selecting the sample pixels is implemented, and the user experience is improved; moreover, since the image segmentation is performed on the basis of the a priori probability and the color likelihood probability, the segmentation standard is detailed and the segmentation precision is high.

The present invention also provides a computer program, which when executing on a processor of a terminal, performs the above method.

It is to be understood that both the foregoing general description and the following detailed description are exemplary and explanatory only and are not restrictive of the invention.

## BRIEF DESCRIPTION OF THE DRAWINGS

The accompanying drawings, which are incorporated in and constitute a part of this specification, illustrate embodiments consistent with the invention and, together with the description, serve to explain the principles of the invention.

Fig. 1 is a flow chart showing a method for segmenting image, according to an exemplary embodiment.
Fig. 2 is a flow chart showing a method for segmenting image, according to an exemplary embodiment.
Fig. 3 is a block diagram illustrating an apparatus for segmenting image, according to an exemplary embodiment.
Fig. 4 is a block diagram illustrating a device for segmenting image, according to an exemplary embodiment.
Fig. 5 is a block diagram illustrating a device for segmenting image, according to an exemplary embodiment.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

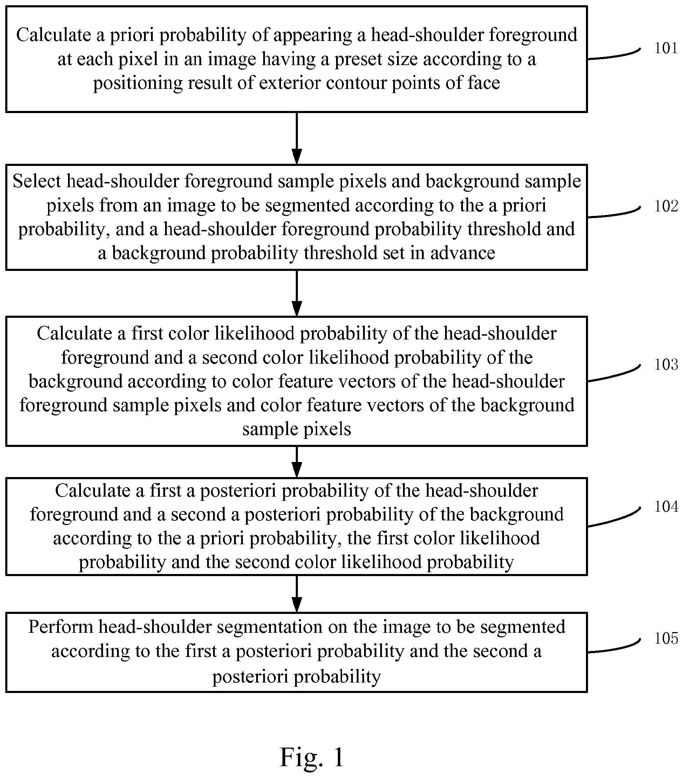

Fig. 1 is a flow chart showing a method for segmenting image, according to an exemplary embodiment. As shown in FIG. 1, the method for segmenting image is used in a device for segmenting image, including the following steps.

In step 101, a priori probability of appearing a head-shoulder foreground at each pixel in an image having a preset size is calculated according to a positioning result of exterior contour points of face.

In step 102, head-shoulder foreground sample pixels and background sample pixels are selected from an image to be segmented according to the a priori probability, and a head-shoulder foreground probability threshold and a background probability threshold set in advance.

In step 103, a first color likelihood probability of the head-shoulder foreground and a second color likelihood probability of the background are calculated according to color feature vectors of the head-shoulder foreground sample pixels and color feature vectors of the background sample pixels.

In step 104, a first a posteriori probability of the head-shoulder foreground and a second a posteriori probability of the background are calculated according to the a priori probability, the first color likelihood probability and the second color likelihood probability.

In step 105, head-shoulder segmentation is performed on the image to be segmented according to the first a posteriori probability and the second a posteriori probability.

According to the method provided by embodiments of the present disclosure, since the a priori probability of appearing the head-shoulder foreground at each pixel in the image having a preset size is calculated according to the positioning result of the exterior contour points of face, and the head-shoulder foreground sample pixels and the background sample pixels are automatically selected on the basis of the a priori probability of the head-shoulder foreground, the object of not needing the user to participate in the process of selecting the sample pixels is implemented, and the user experience is good; moreover, since the image segmentation is performed on the basis of the a priori probability and the color likelihood probability, the segmentation standard is detailed and the segmentation precision is high.

Optionally, the calculating the a priori probability of appearing the head-shoulder foreground at each pixel in the image having a preset size according to the positioning result of the exterior contour points of face includes:

selecting a preset number of frontal face images of females;

generating a head-shoulder calibrated image of each frontal face image of female according to a head-shoulder foreground calibration result by user on each frontal face image of female;

positioning exterior contour characteristic points of face in each frontal face image of female to obtain a positioning result;

performing alignment and size normalization on each head-shoulder calibrated image according to the positioning result of the exterior contour points of face to obtain a multiple of images having a preset size; and

with respect to the pixel at the same position in the multiple of images having a preset size, calculating the a priori probability of appearing the head-shoulder foreground at the pixel according to the head-shoulder foreground calibration result.

Optionally, the calculating the a priori probability of appearing the head-shoulder foreground at each pixel in the image having a preset size according to the positioning result of the exterior contour points of face includes:

selecting a preset number of frontal face images of males;

generating a head-shoulder calibrated image of each frontal face image of male according to a head-shoulder foreground calibration result by user on each frontal face image of female;

positioning exterior contour characteristic points of face in each frontal face image of male to obtain a positioning result;

performing alignment and size normalization on each head-shoulder calibrated image according to the positioning result of the exterior contour points of face to obtain a multiple of images having a preset size; and

with respect to the pixel at the same position in the multiple of images having a preset size, calculating the a priori probability of appearing the head-shoulder foreground at the pixel according to the head-shoulder foreground calibration result.

Optionally, the a priori probability of appearing the head-shoulder foreground at the pixel is calculated according to the head-shoulder foreground calibration result by applying a formula as follows

$$P(I_{(x_i,y_i)}=1)=\frac{\sum_{j=1}^{N}I_{(x_i,y_i)}^{j}}{N}$$

wherein $P(I_{(x_i, y_i)} = 1)$ refers to the a priori probability of appearing the head-shoulder foreground at the pixel $(x_i, y_i)$,

$$I^{j}_{(x_i, y_i)} = 1$$ refers to a calibration result of the pixel $(x_i, y_i)$ in the $j^{th}$ image, $$I^{j}_{(x_i, y_i)} = 1$$ represents that the pixel

$(x_i, y_i)$ in the $j^{th}$ image is calibrated as the head-shoulder foreground, $$I^{j}_{(x_i, y_i)} = 0$$ represents that the pixel $(x_i, y_i)$ in

the $j^{th}$ image is calibrated as the background, and N refers to the number of the frontal face images.

Optionally, the selecting the head-shoulder foreground sample pixels and the background sample pixels in the image to be segmented according to the a priori probability, and the head-shoulder foreground probability threshold and the background probability threshold set in advance includes:

identifying a gender of the face in the image to be segmented to obtain a gender identification result;
determining an a priori probability corresponding to the image to be segmented according to the gender identification result;
with respect to each pixel in the image to be segmented, determining whether the a priori probability of the pixel is larger than the head-shoulder foreground probability threshold; if the a priori probability of the pixel is larger than the head-shoulder foreground probability threshold, determining the pixel as the foreground sample pixel; and
with respect to each pixel in the image to be segmented, determining whether the a priori probability of the pixel is smaller than the background probability threshold; if the a priori probability of the pixel is smaller than the background probability threshold, determining the pixel as the background sample pixel.

Optionally, the calculating the first color likelihood probability of the head-shoulder foreground and the second color likelihood probability of the background according to the color feature vectors of the head-shoulder foreground sample pixels and the color feature vectors of the background sample pixels applies a formula as follows:

$$P(\overline{(R,G,B)} \mid I_{(x_i, y_i)} = 1) = \sum_{j}^{N_F} w_j * \exp(-\frac{dist(\overline{(R,G,B)}, \overline{(R_j, G_j, B_j)})}{2 * \beta_F})$$

$$P(\overline{(R,G,B)} \mid I_{(x_i, y_i)} = 0) = \sum_{j}^{N_B} w_j * \exp(-\frac{dist(\overline{(R,G,B)}, \overline{(R_j, G_j, B_j)})}{2 * \beta_B})$$

wherein $\overline{(R_j, G_j, B_j)}$ refers to a color feature vector of the $j^{th}$ clustering center, $P(\overline{(R,G,B)} \mid I_{(x_i, y_i)} = 1)$ refers to

the first color likelihood probability, $P(\overline{(R,G,B)} \mid I_{(x_i, y_i)} = 0)$ refers to the second color likelihood probability, $N_F$ refers to a number of the clustering centers of the head-shoulder foreground sample pixels, and $N_B$ refers to a number of the clustering centers of the background sample pixels; $dist(\overline{(R,G,B)}, \overline{(R_j, G_j, B_j)})$ refers to an Euclidean distance from the color feature vector $\overline{(R,G,B)}$ to the clustering center $\overline{(R_j, G_j, B_j)}$, $w_j$ refers to a ratio of the number of the sample pixels of the $j^{th}$ clustering center to the number of total sample pixels, and $\beta$ refers to a mean Euclidean distance between the color feature vectors of different clustering centers, which are defined as follows:

$$\beta_F = \frac{2}{N_F(N_F - 1)} \sum_{i=1}^{N_F} \sum_{j=1, j \neq i}^{N_F} dist(\overline{(R_i, G_i, B_i)}, \overline{(R_j, G_j, B_j)})$$

$$\beta_B = \frac{2}{N_B(N_B - 1)} \sum_{i=1}^{N_B} \sum_{j=1, j \neq i}^{N_B} dist(\overline{(R_i, G_i, B_i)}, \overline{(R_j, G_j, B_j)}).$$

Optionally, the calculating the a posteriori probability of the head-shoulder foreground and the a posteriori probability of the background according to the a priori probability, the first color likelihood probability and the second color likelihood probability applies a formula as follows:

$$P(I_{(x_i,y_i)} = 1 \mid \overrightarrow{(R,G,B)}) \propto P(I_{(x_i,y_i)} = 1) * P(\overrightarrow{(R,G,B)} \mid I_{(x_i,y_i)} = 1)$$

$$P(I_{(x_i,y_i)} = 0 \mid \overrightarrow{(R,G,B)}) \propto (1 - P(I_{(x_i,y_i)} = 1)) * P(\overrightarrow{(R,G,B)} \mid I_{(x_i,y_i)} = 0)$$

wherein $P(I_{(x_i,y_i)} = 1 \mid \overrightarrow{(R,G,B)})$ refers to the a posteriori probability of the head-shoulder foreground; and

$$P(I_{(x_i,y_i)} = 0 \mid \overrightarrow{(R,G,B)})$$ refers to the a posteriori probability of the background.

Any combination of all the above-mentioned optional technical solutions may be employed to form optional embodiments of the present invention, which will not be elaborated one by one herein.

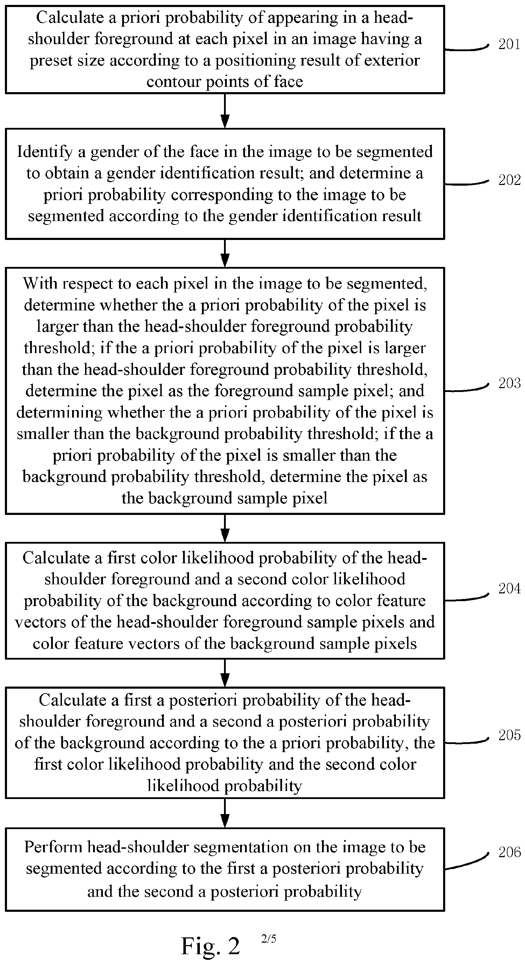

Fig. 2 is a flow chart showing a method for segmenting image, according to an exemplary embodiment. As shown in FIG. 2, the method for segmenting image is used in a device for segmenting image, including the following steps.

In step 201, an a priori probability of appearing a head-shoulder foreground at each pixel in an image having a preset size is calculated according to a positioning result of exterior contour points of face.

In embodiments of the present disclosure, the process of calculating the a priori probability of the head-shoulder foreground is namely the process of establishing a head-shoulder position a priori model. Due to differences between facial features of male and facial features of female, a head-shoulder position a priori model for female and a head-shoulder position a priori model for male need to be respectively established when establishing the head-shoulder position a priori model. The process of establishing the head-shoulder position a priori model is as follows.

In step 201 a, the process of establishing the head-shoulder position a priori model for female includes the following five steps.

In a first step, a preset number of frontal face images of females are selected.

The preset number may be 500 or 1000, and the like, which will not be restricted in embodiments of the present disclosure. The preset number of frontal face images of females are stored in an image training library, functioning as training data for obtaining the head-shoulder position a priori model for female subsequently.

In a second step, a head-shoulder calibrated image of each frontal face image of female is generated according to a head-shoulder foreground calibration result made by user on each frontal face image of female.

In an off-line training process, the head-shoulder foreground calibration of the preset number of frontal face images of females needs to be finished manually. That is, the head-shoulder region in each frontal face image of female needs to be manually calibrated by the user. After the calibration result of each frontal face image of female is obtained, a binary image is generated, and the binary image is functioned as the head-shoulder calibrated image. A region in the binary image having a pixel grey level of 255 is a head-shoulder foreground, that is, a white region in the binary image is a head-shoulder region; and a region in the binary image having a pixel grey level of 0 is a background, that is, a black region in the binary image is a background region.

Moreover, when performing head-shoulder foreground calibration on the frontal face image of female, for a pixel, if the pixel is a head-shoulder foreground, an identity value of the pixel may be set to 1; and if the pixel is a background, the identity value of the pixel may be set to 0. Taking the pixel $(x_i, y_i)$ as an example, $I^j_{(x_i,y_i)} = 1$ represents that the pixel $(x_i, y_i)$ is calibrated as a head-shoulder foreground, and $I^j_{(x_i,y_i)} = 1$ represents that the pixel $(x_i, y_i)$ is calibrated as a background.

In a third step, exterior contour characteristic points of face are positioned in each frontal face image of female to obtain a positioning result.

In embodiments of the present disclosure, the positioning the exterior contour characteristic points of face in each frontal face image of female may be implemented by employing the existing positioning algorithm for the exterior contour points of face, which will not be elaborated herein. After positioning the exterior contour characteristic points of face in the frontal face image of female, position coordinate data of each exterior contour characteristic point of face may be obtained.

In a fourth step, alignment and size normalization is performed on each head-shoulder calibrated image according to the positioning result of the exterior contour characteristic points of face to obtain a multiple of images having a preset size.

The preset size may be 400*400, 200*200, and the like, which will not be restricted in embodiments of the present disclosure. The embodiments of the present disclosure only take a preset size of 400*400 as an example to illustrate.

In embodiments of the present disclosure, with respect to each head-shoulder calibrated image, after obtaining the positioning result of the exterior contour characteristic points of face, the head-shoulder calibrated images are firstly adjusted to a uniform size according to the positioning result of the exterior contour characteristic points of face; then the head-shoulder calibrated images and the exterior contour characteristic points of face are aligned according to the position coordinate data of the exterior contour characteristic points of face, and the head-shoulder calibrated images are normalized in a 400*400 template. Since each head-shoulder calibrated image is corresponding to one 400*400 template, a multiple of images having a preset size may be obtained.

In a fifth step, with respect to the pixel at the same position in the multiple of images having a preset size, the a priori probability of appearing the head-shoulder foreground at the pixel is calculated according to the head-shoulder foreground calibration result.

In embodiments of the present disclosure, with respect to the pixel at the same position in the multiple of images having a preset size, the a priori probability of appearing the head-shoulder foreground at the pixel is namely the frequency of calibrating the pixel in each frontal face image of female in the image training library as a head-shoulder foreground. For example, it is supposed that there are 1000 frontal face images of females, a certain pixel is calibrated as a head-shoulder foreground in 500 frontal face images of females, then the a priori probability of appearing the head-shoulder foreground at the pixel is 0.5. Therefore, the probability of appearing the head-shoulder foreground at each pixel may be obtained by counting the frequency of calibrating each pixel as a head-shoulder foreground in training data.

In step 201b, the process of establishing the head-shoulder position a priori model for male includes the following five steps.

In a first step, a preset number of frontal face images of males are selected.

The preset number may be 500 or 1000, and the like, which will not be restricted in embodiments of the present disclosure. The preset number of frontal face images of males are stored in an image training library, functioning as training data for obtaining the head-shoulder position a priori model for male subsequently.

In a second step, a head-shoulder calibrated image of each frontal face image of male is generated according to a head-shoulder foreground calibration result made by user on each frontal face image of male.

This second step is similar to the second step of step 201a, and will not be elaborated herein.

In a third step, exterior contour characteristic points of face are positioned in each frontal face image of male to obtain a positioning result.

This third step is similar to the third step of step 201a, and will not be elaborated herein.

In a fourth step, alignment and size normalization is performed on each head-shoulder calibrated image according to the positioning result of the exterior contour characteristic points of face to obtain a multiple of images having a preset size.

This fourth step is similar to the fourth step of step 201a, and will not be elaborated herein.

In a fifth step, with respect to the pixel at the same position in the multiple of images having a preset size, the a priori probability of appearing the head-shoulder foreground at the pixel is calculated according to the head-shoulder foreground calibration result.

The fifth step is similar to the fifth step of step 201 a, and will not be elaborated herein.

It should be noted that no matter with respect to step 201a or step 201b, the a priori probability of appearing the head-shoulder foreground at each pixel may be obtained through the following formula (1), and the a priori probability of appearing the head-shoulder foreground at the pixel is calculated according to the head-shoulder foreground calibration result by applying the formula as follows:

$$P(I_{(x_i,y_i)}=1)=\frac{\sum_{j=1}^{N}I_{(x_i,y_i)}^{j}}{N} \qquad (1)$$

wherein $P(I_{(x_i,y_i)}=1)$ refers to the a priori probability of appearing the head-shoulder foreground at the pixel

$(x_i, y_i)$, $I^j_{(x_i, y_i)}$ refers to a calibration result of the pixel $(x_i, y_i)$ in the $j$th image, $I^j_{(x_i, y_i)} = 1$ represents that the pixel $(x_i, y_i)$ in the $j$th image is calibrated as the head-shoulder foreground, $I^j_{(x_i, y_i)} = 0$ represents that the pixel $(x_i, y_i)$ in the $j$th image is calibrated as the background, and N refers to the number of the frontal face images. For the frontal face image of female, the head-shoulder position a priori model for female is obtained after calculating the a priori probability of appearing the head-shoulder foreground at each pixel. For the frontal face image of male, the head-shoulder position a priori model for male is obtained after calculating the a priori probability of appearing the head-shoulder foreground at each pixel.

In step 202, a gender of the face in the image to be segmented is identified to obtain a gender identification result; and a a priori probability corresponding to the image to be segmented is determined according to the gender identification result.

In embodiments of the present disclosure, since facial image features of male and the facial image features of female are difference and corresponding to different head-shoulder position a priori models, the gender of the face in the image to be segmented also needs to be identified before performing image segmentation. The identifying the gender of the face in the image to be segmented may be implemented by using an existing facial identification algorithm, which will not be elaborated herein. Since the head-shoulder position a priori model for female and the head-shoulder position a priori model for male have been obtained in the foregoing step 201, after determining the gender of the face in the image to be segmented, the head-shoulder position a priori model corresponding to the image to be segmented may be directly determined; that is, the a priori probability corresponding to the image to be segmented is obtained.

In step 203, with respect to each pixel in the image to be segmented, whether the a priori probability of the pixel is larger than the head-shoulder foreground probability threshold is determined; if the a priori probability of the pixel is larger than the head-shoulder foreground probability threshold, the pixel is determined as a foreground sample pixel; and whether the a priori probability of the pixel is smaller than the background probability threshold is determined; if the a priori probability of the pixel is smaller than the background probability threshold, the pixel is determined as a background sample pixel.

Specifically, the head-shoulder foreground probability threshold may be 0.7, 0.8, or the like, which will not be restricted in embodiments of the present disclosure. Specifically, tThe background probability threshold may be 0.2, 0.3, or the like, which will not be restricted in embodiments of the present disclosure as well.

In embodiments of the present disclosure, before selecting the sample pixels, the exterior contour characteristic points of face of the image to be segmented may be positioned firstly and the size of the image to be segmented may be adjusted according to the positioning result, so that the size of the image to be segmented is identical to the size of the 400*400 template. In this way, each pixel in the image to be segmented is corresponding to the pixel at the same position in the 400*400 template. Therefore, the a priori probability of appearing the head-shoulder foreground at the pixel on a corresponding position in the 400*400 template is namely the a priori probability corresponding to the pixel at the same position in the image to be segmented.

Taking the head-shoulder foreground probability threshold of 0.8 and the background probability threshold of 0.2 as an example, with respect to each pixel, if the a priori probability of the pixel is larger than 0.8, then the pixel is determined as a foreground sample pixel; and if the a priori probability of the pixel is smaller than 0.2, then the pixel is determined as a background sample pixel. The pixels having a a priori probability between 0.2 and 0.8 will not be processed.

In step 204, a first color likelihood probability of the head-shoulder foreground and a second color likelihood probability of the background are calculated according to color feature vectors of the head-shoulder foreground sample pixels and color feature vectors of the background sample pixels.

In embodiments of the present disclosure, the color feature vectors of the head-shoulder foreground sample pixels and the color feature vectors of the background sample pixels background sample pixels may be obtained by employing an existing color vector calculation formula, which will not be elaborated herein. Before calculating the first color likelihood probability and the second color likelihood probability, i.e. before obtaining the color likelihood model, embodiments of the present disclosure also need to cluster the head-shoulder foreground sample pixels and the background sample pixels according to the relativity among the colors. During clustering, embodiments of the present disclosure cluster the head-shoulder foreground sample pixels into five ($N_F$ =5) clustering centers; in view of the complexity of the background, embodiments of the present disclosure cluster the head-shoulder foreground sample pixels into 15 ($N_B$ =15) clustering centers. Certainly, except the foregoing numbers, $N_F$ and $N_B$ may also be other numbers, which will not be specifically restricted in embodiments of the present disclosure.

The calculating the first color likelihood probability of the head-shoulder foreground and the second color likelihood probability of the background according to the color feature vectors of the head-shoulder foreground sample pixels and the color feature vectors of the background sample pixels may be implemented through the following formula (2) and formula (3).

$$P(\overline{(R,G,B)} \mid I_{(x_i,y_i)} = 1) = \sum_{j}^{N_F} w_j * \exp(-\frac{dist(\overline{(R,G,B)},\overline{(R_j,G_j,B_j)})}{2*\beta_F}) \quad (2)$$

$$P(\overline{(R,G,B)} \mid I_{(x_i,y_i)} = 0) = \sum_{j}^{N_B} w_j * \exp(-\frac{dist(\overline{(R,G,B)},\overline{(R_j,G_j,B_j)})}{2*\beta_B}) \quad (3)$$

wherein $\overline{(R_j,G_j,B_j)}$ refers to a color feature vector of the $j$th clustering center, $P(\overline{(R,G,B)} \mid I_{(x_i,y_i)} = 1)$ refers to the first color likelihood probability, $P(\overline{(R,G,B)} \mid I_{(x_i,y_i)} = 0)$ refers to the second color likelihood probability, $N_F$ refers to a number of the clustering centers of the head-shoulder foreground sample pixels, and $N_B$ refers to a number of the clustering centers of the background sample pixels; $dist(\overline{(R,G,B)},\overline{(R_j,G_j,B_j)})$ refers to an Euclidean distance from the color feature vector $\overline{(R,G,B)}$ to the clustering center $\overline{(R_j,G_j,B_j)}$, $w_j$ refers to a ratio of the number of the sample pixels of the $j$th clustering center to the number of total sample pixels, and $\beta$ refers to a mean Euclidean distance between the color feature vectors of different clustering centers, which are defined as follows:

$$\beta_F = \frac{2}{N_F(N_F-1)} \sum_{i=1}^{N_F} \sum_{j=1,j\neq i}^{N_F} dist(\overline{(R_i,G_i,B_i)},\overline{(R_j,G_j,B_j)}) \quad (4)$$

$$\beta_B = \frac{2}{N_B(N_B-1)} \sum_{i=1}^{N_B} \sum_{j=1,j\neq i}^{N_B} dist(\overline{(R_i,G_i,B_i)},\overline{(R_j,G_j,B_j)}) \quad (5)$$

In step 205, a first a posteriori probability of the head-shoulder foreground and a second a posteriori probability of the background are calculated according to the a priori probability, the first color likelihood probability and the second color likelihood probability.

In embodiments of the present disclosure, after obtaining the head-shoulder position a priori model and the color likelihood model, in accordance with Bayes Posteriori Probability Theory, and in the case that color feature vectors of the head-shoulder foreground sample pixels and the background sample pixels are known, the a posteriori probability of the head-shoulder foreground and the a posteriori probability of the background may be obtained through the following formula (6) and formula (7).

$$P(I_{(x_i,y_i)} = 1 \mid \overline{(R,G,B)}) \propto P(I_{(x_i,y_i)} = 1) * P(\overline{(R,G,B)} \mid I_{(x_i,y_i)} = 1) \quad (6)$$

$$P(I_{(x_i,y_i)} = 0 \mid \overline{(R,G,B)}) \propto (1 - P(I_{(x_i,y_i)} = 1)) * P(\overline{(R,G,B)} \mid I_{(x_i,y_i)} = 0) \quad (7)$$

wherein $P(I_{(x_i,y_i)} = 1 \mid \overline{(R,G,B)})$ refers to the a posteriori probability of the head-shoulder foreground; and

$P(I_{(x_i,y_i)} = 0 \mid \overline{(R,G,B)})$ refers to the a posteriori probability of the background.

In step 206, head-shoulder segmentation is performed on the image to be segmented according to the first a posteriori probability and the second a posteriori probability.

In embodiments of the present disclosure, a final head-shoulder segmentation model is obtained after obtaining the first a posteriori probability and the second a posteriori probability. The head-shoulder segmentation model is loaded into a data item of a Graph cut optimization framework; moreover, a min-cut-max-flow optimization method is employed in combination with the contrast information of the pixels in the image to segment the image to be segmented, so as to obtain the final head-shoulder segmentation result.

According to the method provided by embodiments of the present disclosure, since the a priori probability of appearing the head-shoulder foreground at each pixel in the image having a preset size is calculated according to the positioning result of the exterior contour points of face, and the head-shoulder foreground sample pixels and the background sample pixels are automatically selected on the basis of the a priori probability of the head-shoulder foreground, the object of not needing the user to participate in the process of selecting the sample pixels is implemented, and the user experience is good; moreover, since the image segmentation is performed on the basis of the a priori probability and the color likelihood probability, the segmentation standard is detailed and the segmentation precision is high.

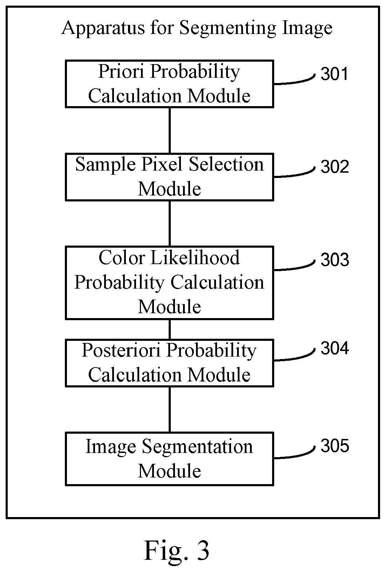

Fig. 3 is a block diagram illustrating an apparatus for segmenting image, according to an exemplary embodiment. Referring to Fig. 3, the apparatus includes an a priori probability calculation module 301, a sample pixel selection module 302, a color likelihood probability calculation module 303, an a posteriori probability calculation module 304, and an image segmentation module 305.

The a priori probability calculation module 301 is configured to calculate an a priori probability of appearing a head-shoulder foreground at each pixel in an image having a preset size according to a positioning result of exterior contour points of face; the sample pixel selection module 302 is connected with the a priori probability calculation module 301 and is configured to select head-shoulder foreground sample pixels and background sample pixels from an image to be segmented according to the a priori probability, and a head-shoulder foreground probability threshold and a background probability threshold set in advance; the color likelihood probability calculation module 303 is connected with the sample pixel selection module 302 and is configured to calculate a first color likelihood probability of the head-shoulder foreground and a second color likelihood probability of the background according to color feature vectors of the head-shoulder foreground sample pixels and color feature vectors of the background sample pixels; the a posteriori probability calculation module 304 is connected with the color likelihood probability calculation module 303, and is configured to calculate a first a posteriori probability of the head-shoulder foreground and a second a posteriori probability of the background according to the a priori probability, the first color likelihood probability and the second color likelihood probability; and the image segmentation module 305 is connected with the a posteriori probability calculation module 304, and is configured to perform head-shoulder segmentation on the image to be segmented according to the first a posteriori probability and the second a posteriori probability.

Optionally, the a priori probability calculation module is configured to select a preset number of frontal face images of females; generate a head-shoulder calibrated image of each frontal face image of female according to a head-shoulder foreground calibration result by user on each frontal face image of female; position exterior contour characteristic points of face in each frontal face image of female to obtain a positioning result; perform alignment and size normalization on each head-shoulder calibrated image according to the positioning result of the exterior contour points of face to obtain a multiple of images having a preset size; and with respect to the pixel at the same position in the multiple of images having a preset size, calculate the a priori probability of appearing the head-shoulder foreground at the pixel according to the head-shoulder foreground calibration result.

Optionally, the a priori probability calculation module is configured to select a preset number of frontal face images of males; generate a head-shoulder calibrated image of each frontal face image of male according to a head-shoulder foreground calibration result by user on each frontal face image of female; position exterior contour characteristic points of face in each frontal face image of male to obtain a positioning result; perform alignment and size normalization on each head-shoulder calibrated image according to the positioning result of the exterior contour points of face to obtain a multiple of images having a preset size; and with respect to the pixel at the same position in the multiple of images having a preset size, calculate the a priori probability of appearing the head-shoulder foreground at the pixel according to the head-shoulder foreground calibration result.

Optionally, the a priori probability calculation module calculates the a priori probability of appearing the head-shoulder foreground at the pixel by applying a formula as follows:

$$P(I_{(x_i,y_i)}=1)=\frac{\sum_{j=1}^{N} I_{(x_i,y_i)}^{j}}{N}$$

wherein $P(I_{(x_i,y_i)} = 1)$ refers to the a priori probability of appearing the head-shoulder foreground at the pixel $(x_i,y_i)$,

$I^{j}_{(x_i,y_i)} = 1$ refers to a calibration result at the pixel $(x_i, y_i)$ in the $j^{th}$ image, $I^{j}_{(x_i,y_i)} = 1$ represents that the pixel $(x_i, y_i)$ in the $j^{th}$ image is calibrated as the head-shoulder foreground, $I^{j}_{(x_i,y_i)} = 0$ represents that the pixel $(x_i, y_i)$ in the $j^{th}$ image is calibrated as the background, and N refers to the number of the frontal face images.

Optionally, the sample pixel selection module is configured to identify a gender of the face in the image to be segmented to obtain a gender identification result; determine an a priori probability corresponding to the image to be segmented according to the gender identification result; with respect to each pixel in the image to be segmented, determine whether the a priori probability of the pixel is larger than the head-shoulder foreground probability threshold; if the a priori probability of the pixel is larger than the head-shoulder foreground probability threshold, determine the pixel as a foreground sample pixel; and with respect to each pixel in the image to be segmented, determine whether the a priori probability of the pixel is smaller than the background probability threshold; if the a priori probability of the pixel is smaller than the background probability threshold, determine the pixel as a background sample pixel.

Optionally, the color likelihood probability calculation module calculates the first color likelihood probability of the head-shoulder foreground and the second color likelihood probability of the background by applying a formula as follows:

$$P(\overline{(R,G,B)} \mid I_{(x_i,y_i)} = 1) = \sum_{j}^{N_F} w_j * \exp(-\frac{dist(\overline{(R,G,B)},\overline{(R_j,G_j,B_j)})}{2*\beta_F})$$

$$P(\overline{(R,G,B)} \mid I_{(x_i,y_i)} = 0) = \sum_{j}^{N_B} w_j * \exp(-\frac{dist(\overline{(R,G,B)},\overline{(R_j,G_j,B_j)})}{2*\beta_B})$$

wherein $\overline{(R_j,G_j,B_j)}$ refers to a color feature vector of the $j^{th}$ clustering center, $P(\overline{(R,G,B)} \mid I_{(x_i,y_i)} = 1)$ refers to the first color likelihood probability, $P(\overline{(R,G,B)} \mid I_{(x_i,y_i)} = 0)$ refers to the second color likelihood probability, $N_F$ refers to a number of the clustering centers of the head-shoulder foreground sample pixels, and $N_B$ refers to a number of the clustering centers of the background sample pixels; $dist(\overline{(R,G,B)},\overline{(R_j,G_j,B_j)})$ refers to an Euclidean distance from the color feature vector $\overline{(R,G,B)}$ to the clustering center $\overline{(R_j,G_j,B_j)}$, $w_j$ refers to a ratio of the number of the sample pixels of the $j^{th}$ clustering center to the number of total sample pixels, and $\beta$ refers to the mean Euclidean distance between the color feature vectors of different clustering centers, which are defined as follows:

$$\beta_F = \frac{2}{N_F(N_F-1)} \sum_{i=1}^{N_F} \sum_{j=1,j\neq i}^{N_F} dist(\overline{(R_i,G_i,B_i)},\overline{(R_j,G_j,B_j)})$$

$$\beta_B = \frac{2}{N_B(N_B-1)} \sum_{i=1}^{N_B} \sum_{j=1,j\neq i}^{N_B} dist(\overline{(R_i,G_i,B_i)},\overline{(R_j,G_j,B_j)})$$

Optionally, the a posteriori probability calculation module calculates the a posteriori probability of the head-shoulder foreground and the a posteriori probability of the background by applying a formula as follows, including:

$$P(I_{(x_i,y_i)} = 1 \mid \overline{(R,G,B)}) \propto P(I_{(x_i,y_i)} = 1) * P(\overline{(R,G,B)} \mid I_{(x_i,y_i)} = 1)$$

$$P(I_{(x_i,y_i)} = 0 \mid \overrightarrow{(R,G,B)}) \propto (1 - P(I_{(x_i,y_i)} = 1)) * P(\overrightarrow{(R,G,B)} \mid I_{(x_i,y_i)} = 0)$$

wherein $P(I_{(x_i,y_i)} = 1 \mid \overrightarrow{(R,G,B)})$ refers to the a posteriori probability of the head-shoulder foreground; and

$P(I_{(x_i,y_i)} = 0 \mid \overrightarrow{(R,G,B)})$ refers to the a posteriori probability of the background.

According to the apparatus provided by embodiments of the present disclosure, since the a priori probability of appearing the head-shoulder foreground at each pixel in the image having a preset size is calculated according to the positioning result of the exterior contour points of face, and the head-shoulder foreground sample pixels and the background sample pixels are automatically selected on the basis of the a priori probability of the head-shoulder foreground, the object of not needing the user to participate in the process of selecting the sample pixels is implemented, and the user experience is good; moreover, since the image segmentation is performed on the basis of the a priori probability and the color likelihood probability, the segmentation standard is detailed and the segmentation precision is high.

With respect to the devices in the above embodiments, the specific manners for performing operations for individual modules therein have been described in detail in the embodiments regarding the methods, which will not be elaborated herein.

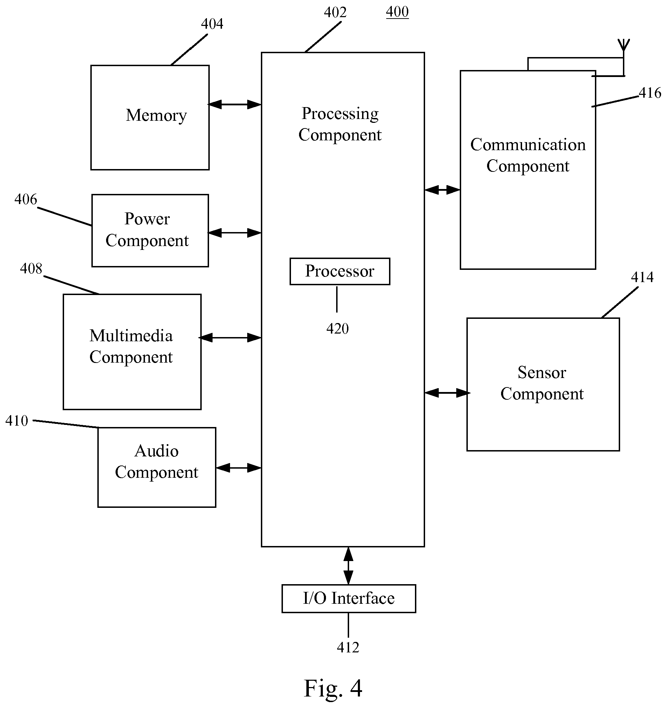

Fig. 4 is a block diagram of a device 400 for segmenting image, according to an exemplary embodiment. For example, the device 400 may be a mobile phone, a computer, a digital broadcast terminal, a messaging device, a gaming console, a tablet, a medical device, exercise equipment, a personal digital assistant, and the like.

Referring to Fig. 4, the device 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the device 400, such as the operations associated with display, telephone calls, data communications, camera operations, and recording operations. The processing component 402 may include one or more processors 420 to execute instructions to perform all or part of the steps in the above described methods. Moreover, the processing component 402 may include one or more modules which facilitate the interaction between the processing component 402 and other components. For instance, the processing component 402 may include a multimedia module to facilitate the interaction between the multimedia component 408 and the processing component 402.

The memory 404 is configured to store various types of data to support the operation of the device 400. Examples of such data include instructions for any applications or methods operated on the device 400, contact data, phonebook data, messages, pictures, video, etc. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the device 400. The power component 406 may include a power management system, one or more power sources, and any other components associated with the generation, management, and distribution of power in the device 400.

The multimedia component 408 includes a screen providing an output interface between the device 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 408 includes a front camera and/or a rear camera. The front camera and/or the rear camera may receive an external multimedia datum while the device 400 is in an operation mode, such as a photographing mode or a video mode. Each of the front camera and the rear camera may be a fixed optical lens system or have focus and optical zoom capability.

The audio component 410 is configured to output and/or input audio signals. For example, the audio component 410 includes a microphone ("MIC") configured to receive an external audio signal when the device 400 is in an operation mode, such as a call mode, a recording mode, and a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and peripheral interface modules, such as a keyboard, a click wheel, buttons, and the like. The buttons may include, but are not limited to, a home button, a volume button, a starting button, and a locking button.

The sensor component 414 includes one or more sensors to provide status assessments of various aspects of the device 400. For instance, the sensor component 414 may detect an open/closed status of the device 400, relative positioning of components, e.g., the display and the keypad, of the device 400, a change in position of the device 400 or a component of the device 400, a presence or absence of user contact with the device 400, an orientation or an acceleration/deceleration of the device 400, and a change in temperature of the device 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor. In some embodiments, the sensor component 414 may also include an accelerometer sensor, a gyroscope sensor, a magnetic sensor, a pressure sensor, or a temperature sensor.

The communication component 416 is configured to facilitate communication, wired or wirelessly, between the device 400 and other devices. The device 400 can access a wireless network based on a communication standard, such as WiFi, 2G, or 3G, or a combination thereof. In one exemplary embodiment, the communication component 416 receives a broadcast signal or broadcast associated information from an external broadcast management system via a broadcast channel. In one exemplary embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 404, executable by the processor 420 in the device 400, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium, when an instruction in a storage medium is performed by a processor of a mobile terminal, enables the mobile terminal to perform a method for segmenting image, wherein the method includes:

> calculating an a priori probability of appearing a head-shoulder foreground at each pixel in an image having a preset size according to a positioning result of exterior contour points of face;
> selecting head-shoulder foreground sample pixels and background sample pixels from an image to be segmented according to the a priori probability, and a head-shoulder foreground probability threshold and a background probability threshold set in advance;
> calculating a first color likelihood probability of the head-shoulder foreground and a second color likelihood probability of the background according to color feature vectors of the head-shoulder foreground sample pixels and color feature vectors of the background sample pixels;
> calculating a first a posteriori probability of the head-shoulder foreground and a second a posteriori probability of the background according to the a priori probability, the first color likelihood probability and the second color likelihood probability; and
> performing head-shoulder segmentation on the image to be segmented according to the first a posteriori probability and the second a posteriori probability.

Optionally, the calculating the a priori probability of appearing the head-shoulder foreground at each pixel in the image having a preset size according to the positioning result of the exterior contour points of face includes:

> selecting a preset number of frontal face images of females;
> generating a head-shoulder calibrated image of each frontal face image of female according to a head-shoulder foreground calibration result by user on each frontal face image of female;
> positioning exterior contour characteristic points of face in each frontal face image of female to obtain a positioning result;
> performing alignment and size normalization on each head-shoulder calibrated image according to the positioning result of the exterior contour points of face to obtain a multiple of images having a preset size; and
> with respect to the pixel at the same position in the multiple of images having a preset size, calculating the a priori probability of appearing the head-shoulder foreground at the pixel according to the head-shoulder foreground calibration result.

Optionally, the calculating the a priori probability of appearing the head-shoulder foreground at each pixel in the image having a preset size according to the positioning result of the exterior contour points of face includes:

selecting a preset number of frontal face images of males;
generating a head-shoulder calibrated image of each frontal face image of male according to a head-shoulder foreground calibration result by user on each frontal face image of female;
positioning exterior contour characteristic points of face in each frontal face image of male to obtain a positioning result;
performing alignment and size normalization on each head-shoulder calibrated image according to the positioning result of the exterior contour points of face to obtain a multiple of images having a preset size; and
with respect to the pixel at the same position in the multiple of images having a preset size, calculating the a priori probability of appearing the head-shoulder foreground at the pixel according to the head-shoulder foreground calibration result.

Optionally, the a priori probability of appearing the head-shoulder foreground at the pixels is calculated according to the head-shoulder foreground calibration result by applying a formula as follows:

$$P(I_{(x_i,y_i)} = 1) = \frac{\sum_{j=1}^{N} I_{(x_i,y_i)}^j}{N}$$

wherein $P(I_{(x_i,y_i)} = 1)$ refers to the a priori probability of appearing the head-shoulder foreground at the pixel $(x_i,y_i)$, $I_{(x_i,y_i)}^j$ refers to a calibration result at the pixel $(x_i,y_i)$ in the $j$th image, $I_{(x_i,y_i)}^j = 1$ represents that the pixel $(x_i,y_i)$ in the $j$th image is calibrated as the head-shoulder foreground, $I_{(x_i,y_i)}^j = 0$ represents that the pixel $(x_i,y_i)$ in the $j$th image is calibrated as the background, and N refers to the number of the frontal face images.

Optionally, the selecting the head-shoulder foreground sample pixels and the background sample pixels from the image to be segmented according to the a priori probability, and the head-shoulder foreground probability threshold and the background probability threshold set in advance includes:

identifying a gender of the face in the image to be segmented to obtain a gender identification result;
determining an a priori probability corresponding to the image to be segmented according to the gender identification result;
with respect to each pixel in the image to be segmented, determining whether the a priori probability of the pixel is larger than the head-shoulder foreground probability threshold; if the a priori probability of the pixel is larger than the head-shoulder foreground probability threshold, determining the pixel as a foreground sample pixel; and
with respect to each pixel in the image to be segmented, determining whether the a priori probability of the pixel is smaller than the background probability threshold; if the a priori probability of the pixel is smaller than the background probability threshold, determining the pixel as a background sample pixel.

Optionally, the calculating the first color likelihood probability of the head-shoulder foreground and the second color likelihood probability of the background according to the color feature vectors of the head-shoulder foreground sample pixels and the color feature vectors of the background sample pixels applies formulas as follows:

$$P(\overline{(R,G,B)} \mid I_{(x_i,y_i)} = 1) = \sum_{j}^{N_F} w_j * \exp(-\frac{dist(\overline{(R,G,B)},\overline{(R_j,G_j,B_j)})}{2 * \beta_F})$$

$$P(\overrightarrow{(R,G,B)} \,|\, I_{(x_i,y_i)} = 0) = \sum_{j}^{N_B} w_j * \exp(-\frac{dist(\overrightarrow{(R,G,B)},\overrightarrow{(R_j,G_j,B_j)})}{2*\beta_B})$$

wherein $\overrightarrow{(R_j,G_j,B_j)}$ refers to a color feature vector of the $j$th clustering center, $P(\overrightarrow{(R,G,B)} \,|\, I_{(x_i,y_i)} = 1)$ refers to the first color likelihood probability, $P(\overrightarrow{(R,G,B)} \,|\, I_{(x_i,y_i)} = 0)$ refers to the second color likelihood probability, $N_F$ refers to a number of the clustering centers of the head-shoulder foreground sample pixels, and $N_B$ refers to a number of the clustering centers of the background sample pixels; $dist(\overrightarrow{(R,G,B)},\overrightarrow{(R_j,G_j,B_j)})$ refers to an Euclidean distance from the color feature vector $\overrightarrow{(R,G,B)}$ to the clustering center $\overrightarrow{(R_j,G_j,B_j)}$, $w_j$ refers to a ratio of the number of the sample pixels of the $j$th clustering center to the number of total sample pixels, and $\beta$ refers to a mean Euclidean distance between the color feature vectors of different clustering centers, which are defined as follows:

$$\beta_F = \frac{2}{N_F(N_F-1)} \sum_{i=1}^{N_F} \sum_{j=1,j\neq i}^{N_F} dist(\overrightarrow{(R_i,G_i,B_i)},\overrightarrow{(R_j,G_j,B_j)})$$

$$\beta_B = \frac{2}{N_B(N_B-1)} \sum_{i=1}^{N_B} \sum_{j=1,j\neq i}^{N_B} dist(\overrightarrow{(R_i,G_i,B_i)},\overrightarrow{(R_j,G_j,B_j)})$$

Optionally, the calculating the a posteriori probability of the head-shoulder foreground and the a posteriori probability of the background according to the a priori probability, the first color likelihood probability and the second color likelihood probability applies formulas as follows:

$$P(I_{(x_i,y_i)} = 1 \,|\, \overrightarrow{(R,G,B)}) \propto P(I_{(x_i,y_i)} = 1) * P(\overrightarrow{(R,G,B)} \,|\, I_{(x_i,y_i)} = 1)$$

$$P(I_{(x_i,y_i)} = 0 \,|\, \overrightarrow{(R,G,B)}) \propto (1 - P(I_{(x_i,y_i)} = 1)) * P(\overrightarrow{(R,G,B)} \,|\, I_{(x_i,y_i)} = 0)$$

wherein $P(I_{(x_i,y_i)} = 1 \,|\, (R,G,B))$ refers to the a posteriori probability of the head-shoulder foreground; and $P(I_{(x_i,y_i)} = 0 \,|\, \overrightarrow{(R,G,B)})$ refers to the a posteriori probability of the background.

According to the non-transitory computer-readable storage medium provided by embodiments of the present disclosure, since the a priori probability of appearing the head-shoulder foreground at each pixel in the image having a preset size is calculated according to the positioning result of the exterior contour points of face, and the head-shoulder foreground sample pixels and the background sample pixels are automatically selected on the basis of the a priori probability of the head-shoulder foreground, the object of not needing the user to participate in the process of selecting the sample pixels is implemented, and the user experience is good; moreover, since the image segmentation is performed on the basis of the a priori probability and the color likelihood probability, the segmentation standard is detailed and the segmentation precision is high.

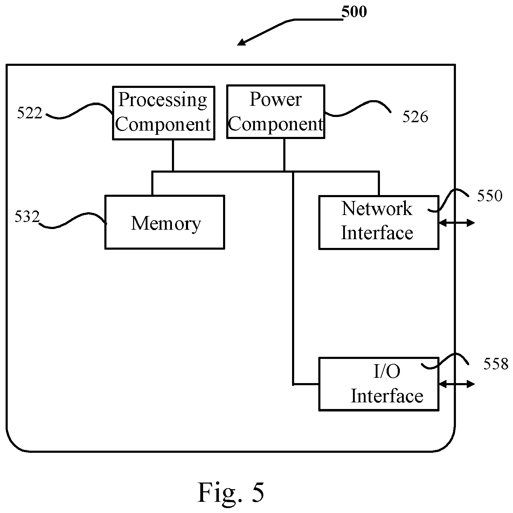

Fig. 5 is a block diagram illustrating a device 500 for segmenting image, according to an exemplary embodiment. For example, the device 500 may be provided as a server. Referring to Fig.5, the device 500 includes a processing component 522 that further includes one or more processors, and memory resources represented by a memory 532 for storing instructions executable by the processing component 522, such as application programs. The application programs stored in the memory 532 may include one or more modules each corresponding to a set of instructions. Further, the processing component 522 is configured to execute the instructions to perform the above described method.

The device 500 may also include a power component 526 configured to perform power management of the device 500, wired or wireless network interface(s) 550 configured to connect the device 500 to a network, and an input/output (I/O) interface 558. The device 500 may operate based on an operating system stored in the memory 532, such as Windows ServerTM, Mac OS XTM, UnixTM, LinuxTM, FreeBSDTM, or the like.

**Claims**

1. A method for segmenting an image, the method comprising:

   calculating (101) an a priori probability of appearing in a head-shoulder foreground for each pixel in an image having a preset size according to a positioning result of exterior facial contour points;
   selecting (102) head-shoulder foreground sample pixels and background sample pixels from an image to be segmented according to the a priori probability, and a head-shoulder foreground probability threshold and a background probability threshold which are set in advance;
   calculating (103) a first color likelihood probability of the head-shoulder foreground and a second color likelihood probability of the background according to color feature vectors of the head-shoulder foreground sample pixels and color feature vectors of the background sample pixels;
   calculating (104) a first a posteriori probability of the head-shoulder foreground and a second a posteriori probability of the background according to the a priori probability, the first color likelihood probability and the second color likelihood probability; and
   performing (105) head-shoulder segmentation on the image to be segmented according to the first a posteriori probability and the second a posteriori probability;

   **characterised in that**
   selecting the head-shoulder foreground sample pixels and the background sample pixels from the image to be segmented according to the a priori probability, and the head-shoulder foreground probability threshold and the background probability threshold which are set in advance comprises:

   identifying (202) a gender of the face in the image to be segmented to obtain a gender identification result;
   determining an a priori probability corresponding to the image to be segmented according to the gender identification result;
   with respect to each pixel in the image to be segmented, determining (203) whether the a priori probability of the pixel is larger than the head-shoulder foreground probability threshold; if the a priori probability of the pixel is larger than the head-shoulder foreground probability threshold, determining the pixel as the foreground sample pixel; and
   with respect to each pixel in the image to be segmented, determining whether the a priori probability of the pixel is smaller than the background probability threshold; if the a priori probability of the pixel is smaller than the background probability threshold, determining the pixel as the background sample pixel.

2. The method according to claim 1, wherein the calculating the a priori probability of appearing in the head-shoulder foreground for each pixel in the image having the preset size according to the positioning result of the exterior facial contour points comprises:

   selecting a preset number of frontal face images of females;
   generating a head-shoulder calibrated image of each female frontal face image according to a head-shoulder foreground calibration result by the user on each female frontal face image;
   positioning exterior facial contour characteristic points in each female frontal face image to obtain a positioning result;
   performing alignment and size normalization on each head-shoulder calibrated image according to the positioning result of the exterior facial contour characteristic points to obtain a multiple of images having a preset size; and
   with respect to the pixel at the same position in the multiple of images having the preset size, calculating the a priori probability of appearing in the head-shoulder foreground for the pixel according to the head-shoulder foreground calibration result.

3. The method according to claim 1, wherein the calculating the a priori probability of appearing in the head-shoulder foreground for each pixel in the image having the preset size according to the positioning result of the exterior facial contour points comprises:

selecting a preset number of frontal face images of males;

generating a head-shoulder calibrated image of each male frontal face image according to a head-shoulder foreground calibration result by the user on each male frontal face image;

positioning exterior facial contour characteristic points of each male frontal face image to obtain a positioning result;

performing alignment and size normalization on each head-shoulder calibrated image according to the positioning result of the exterior facial contour characteristic points to obtain a multiple of images having a preset size; and

with respect to the pixel at the same position in the multiple of images having a preset size, calculating the a priori probability of appearing in the head-shoulder foreground for the pixel according to the head-shoulder foreground calibration result.

4. The method according to any of claims 2 or 3, wherein the calculating the a priori probability of appearing in the head-shoulder foreground for the pixel according to the head-shoulder foreground calibration result applies a formula as follows:

$$P(I_{(x_i,y_i)} = 1) = \frac{\sum_{j=1}^{N} I_{(x_i,y_i)}^{j}}{N}$$

wherein $P(I_{(x_i,y_i)} = 1)$ refers to the a priori probability of appearing in the head-shoulder foreground for the pixel $(x_i, y_i)$, $I_{(x_i,y_i)}^{j}$ refers to the calibration result for the pixel $(x_i, y_i)$ in the $j^{th}$ image, $I_{(x_i,y_i)}^{j} = 1$ indicates that the pixel $(x_i, y_i)$ in the $j^{th}$ image is calibrated as the head-shoulder foreground, $I_{(x_i,y_i)}^{j} = 0$ indicates that the pixel $(x_i, y_i)$ in the $j^{th}$ image is calibrated as the background, and N refers to the number of the frontal face images.

5. The method according to any preceding claim, wherein the calculating the first color likelihood probability of the head-shoulder foreground and the second color likelihood probability of the background according to the color feature vectors of the head-shoulder foreground sample pixels and the color feature vectors of the background sample pixels applies a formula as follows:

$$P(\overrightarrow{(R,G,B)} \mid I_{(x_i,y_i)} = 1) = \sum_{j}^{N_F} w_j * \exp(-\frac{dist(\overrightarrow{(R,G,B)}, \overrightarrow{(R_j,G_j,B_j)})}{2 * \beta_F})$$

$$P(\overrightarrow{(R,G,B)} \mid I_{(x_i,y_i)} = 0) = \sum_{j}^{N_B} w_j * \exp(-\frac{dist(\overrightarrow{(R,G,B)}, \overrightarrow{(R_j,G_j,B_j)})}{2 * \beta_B})$$

wherein $\overrightarrow{(R_j,G_j,B_j)}$ refers to a color feature vector of the $j^{th}$ clustering center, $P(\overrightarrow{(R,G,B)} \mid I_{(x_i,y_i)} = 1)$ refers to the first color likelihood probability, $P(\overrightarrow{(R,G,B)} \mid I_{(x_i,y_i)} = 0)$ refers to the second color likelihood probability, $N_F$ refers to a number of the clustering centers of the head-shoulder foreground sample pixels, and $N_B$ refers to a number of the clustering centers of the background sample pixels; $dist(\overrightarrow{(R,G,B)}, \overrightarrow{(R_j,G_j,B_j)})$ refers to a Euclidean distance from the color feature vector $\overrightarrow{(R,G,B)}$ to the clustering center $\overrightarrow{(R_j,G_j,B_j)}$, $w_j$ refers to a ratio of the number of the sample pixels of the $j^{th}$ clustering center to the number of total sample pixels, and $\beta$ refers to a mean Euclidean distance between the color feature vectors of different clustering centers, which are defined as follows:

$$\beta_F = \frac{2}{N_F(N_F-1)} \sum_{i=1}^{N_F} \sum_{j=1,j\neq i}^{N_F} dist((\overrightarrow{R_i,G_i,B_i}),(\overrightarrow{R_j,G_j,B_j}))$$

$$\beta_B = \frac{2}{N_B(N_B-1)} \sum_{i=1}^{N_B} \sum_{j=1,j\neq i}^{N_B} dist((\overrightarrow{R_i,G_i,B_i}),(\overrightarrow{R_j,G_j,B_j}))$$

6. The method according to any one of claims 1 to 5, **characterized in that**, the calculating the a posteriori probability of the head-shoulder foreground and the a posteriori probability of the background according to the a priori probability, the first color likelihood probability and the second color likelihood probability applies a formula as follows:

$$P(I_{(x_i,y_i)} = 1 \mid \overrightarrow{(R,G,B)}) \propto P(I_{(x_i,y_i)} = 1) * P(\overrightarrow{(R,G,B)} \mid I_{(x_i,y_i)} = 1)$$

$$P(I_{(x_i,y_i)} = 0 \mid \overrightarrow{(R,G,B)}) \propto (1 - P(I_{(x_i,y_i)} = 1)) * P(\overrightarrow{(R,G,B)} \mid I_{(x_i,y_i)} = 0)$$

wherein $P(I_{(x_i,y_i)} = 1 \mid \overrightarrow{(R,G,B)})$ refers to the a posteriori probability of the head-shoulder foreground;

and $P(I_{(x_i,y_i)} = 0 \mid \overrightarrow{(R,G,B)})$ refers to the a posteriori probability of the background.

7. An apparatus for segmenting an image, the apparatus comprising:

an a priori probability calculation module (301) configured to calculate an a priori probability of appearing in a head-shoulder foreground for each pixel in an image having a preset size according to a positioning result of exterior facial contour points;

a sample pixel selection module (302) configured to select head-shoulder foreground sample pixels and background sample pixels from an image to be segmented according to the a priori probability, and a head-shoulder foreground probability threshold and a background probability threshold which are set in advance;

a color likelihood probability calculation module (303) configured to calculate a first color likelihood probability of the head-shoulder foreground and a second color likelihood probability of the background according to color feature vectors of the head-shoulder foreground sample pixels and color feature vectors of the background sample pixels;

an a posteriori probability calculation module (304) configured to calculate a first a posteriori probability of the head-shoulder foreground and a second a posteriori probability of the background according to the a priori probability, the first color likelihood probability and the second color likelihood probability; and

an image segmentation module (305) configured to perform head-shoulder segmentation on the image to be segmented according to the first a posteriori probability and the second a posteriori probability;

**characterised in that** the sample pixel selection module is configured to:

identify a gender of the face in the image to be segmented to obtain a gender identification result;

determine an a priori probability corresponding to the image to be segmented according to the gender identification result;

with respect to each pixel in the image to be segmented, determine whether the a priori probability of the pixel is larger than the head-shoulder foreground probability threshold, and if the a priori probability of the pixel is larger than the head-shoulder foreground probability threshold, determine the pixel as the foreground sample pixel; and

with respect to each pixel in the image to be segmented, determine whether the a priori probability of the pixel is smaller than the background probability threshold, and if the a priori probability of the pixel is smaller than the background probability threshold, determine the pixel as the background sample pixel.

8. The apparatus according to claim 8, wherein the a priori probability calculation module is configured to select a preset number of frontal face images of females or males; generate a head-shoulder calibrated image of each female frontal face image , or of each male frontal face image, according to a head-shoulder foreground calibration result by the user on each female frontal face image, or each male frontal face image; position exterior facial contour characteristic points in each female frontal face image , or in each male frontal face image, to obtain a positioning result; perform alignment and size normalization on each head-shoulder calibrated image according to the positioning result of the exterior facial contour points to obtain a multiple of images having a preset size; and with respect to the pixel at the same position in the multiple of images having the preset size, calculate the a priori probability of appearing in the head-shoulder foreground for the pixel according to the head-shoulder foreground calibration result.

9. The apparatus according to claim 8, wherein the a priori probability calculation module calculates the a priori probability of appearing in the head-shoulder foreground for the pixel by applying a formula as follows:

$$P(I_{(x_i,y_i)} = 1) = \frac{\sum_{j=1}^{N} I_{(x_i,y_i)}^{j}}{N}$$

wherein $P(I_{(x_i,y_i)} = 1)$ refers to the a priori probability of appearing in the head-shoulder foreground for the pixel $(x_i,y_i)$, $I_{(x_i,y_i)}^{j} = 1$ refers to the calibration result for the pixel $(x_i,y_i)$ in the $j^{th}$ image, $I_{(x_i,y_i)}^{j} = 1$ indicates that the pixel $(x_i,y_i)$ in the $j^{th}$ image is calibrated as the head-shoulder foreground, $I_{(x_i,y_i)}^{j} = 0$ indicates that the pixel $(x_i,y_i)$ in the $j^{th}$ image is calibrated as the background, and N refers to the number of the frontal face images.

10. The apparatus according to any of claims 7 to 9, **characterized in that**, the color likelihood probability calculation module calculates the first color likelihood probability of the head-shoulder foreground and the second color likelihood probability of the background by applying a formula as follows:

$$P(\overrightarrow{(R,G,B)} \mid I_{(x_i,y_i)} = 1) = \sum_{j}^{N_F} w_j * \exp(-\frac{dist(\overrightarrow{(R,G,B)},\overrightarrow{(R_j,G_j,B_j)})}{2 * \beta_F})$$

$$P(\overrightarrow{(R,G,B)} \mid I_{(x_i,y_i)} = 0) = \sum_{j}^{N_B} w_j * \exp(-\frac{dist(\overrightarrow{(R,G,B)},\overrightarrow{(R_j,G_j,B_j)})}{2 * \beta_B})$$

wherein $\overrightarrow{(R_j,G_j,B_j)}$ refers to a color feature vector of the $j^{th}$ clustering center, $P(\overrightarrow{(R,G,B)} \mid I_{(x_i,y_i)} = 1)$ refers to the first color likelihood probability, $P(\overrightarrow{(R,G,B)} \mid I_{(x_i,y_i)} = 0)$ refers to the second color likelihood probability, $N_F$ refers to a number of the clustering centers of the head-shoulder foreground sample pixels, and $N_B$ refers to a number of the clustering centers of the background sample pixels; $dist(\overrightarrow{(R,G,B)},\overrightarrow{(R_j,G_j,B_j)})$ refers to an Euclidean distance from the color feature vector $\overrightarrow{(R,G,B)}$ to the clustering center $\overrightarrow{(R_j,G_j,B_j)}$, $w_j$ refers to a ratio of the number of the sample pixels of the $j^{th}$ clustering center to the number of total sample pixels, and $\beta$ refers to the mean Euclidean distance between the color feature vectors of different clustering centers, which are defined as follows:

$$\beta_F = \frac{2}{N_F(N_F-1)}\sum_{i=1}^{N_F}\sum_{j=1,j\neq i}^{N_F} dist((\overrightarrow{R_i,G_i,B_i}),(\overrightarrow{R_j,G_j,B_j}))$$

$$\beta_B = \frac{2}{N_B(N_B-1)}\sum_{i=1}^{N_B}\sum_{j=1,j\neq i}^{N_B} dist((\overrightarrow{R_i,G_i,B_i}),(\overrightarrow{R_j,G_j,B_j}))$$

**11.** The apparatus according to any one of claims 7 to 10, **characterized in that**, the a posteriori probability calculation module calculates the a posteriori probability of the head-shoulder foreground and the a posteriori probability of the background by applying a formula as follows, comprising:

$$P(I_{(x_i,y_i)}=1\,|\,\overrightarrow{(R,G,B)}) \propto P(I_{(x_i,y_i)}=1)*P(\overrightarrow{(R,G,B)}\,|\,I_{(x_i,y_i)}=1)$$

$$P(I_{(x_i,y_i)}=0\,|\,\overrightarrow{(R,G,B)}) \propto (1-P(I_{(x_i,y_i)}=1))*P(\overrightarrow{(R,G,B)}\,|\,I_{(x_i,y_i)}=0)$$

wherein $P(I_{(x_i,y_i)}=1\,|\,\overrightarrow{(R,G,B)})$ refers to the a posteriori probability of the head-shoulder foreground;

and $P(I_{(x_i,y_i)}=0\,|\,\overrightarrow{(R,G,B)})$ refers to the a posteriori probability of the background.

**12.** A device for segmenting an image, **characterized in that**, the device comprises:

a processor; and
a memory for storing instructions executable by the processor;

wherein the processor is configured to perform the method of any of claims 1 to 6.

**13.** A computer program product, which when executed on a processor of a terminal, performs a method according to any one of claims 1 to 6.

**Patentansprüche**

**1.** Verfahren zum Segmentieren eines Bildes, wobei das Verfahren Folgendes beinhaltet:

Berechnen (101) einer A-priori-Wahrscheinlichkeit des Erscheinens in einem Kopf-Schulter-Vordergrund für jedes Pixel in einem Bild mit einer voreingestellten Größe gemäß einem Positionierungsergebnis von externen Gesichtkonturpunkten;
Auswählen (102) von Kopf-Schulter-Vordergrund-Sample-Pixeln und Hintergrund-Sample-Pixeln aus einem zu segmentierenden Bild gemäß der A-priori-Wahrscheinlichkeit, und einer Kopf-Schulter-Vordergrund-Wahrscheinlichkeitsschwelle und einer Hintergrund-Wahrscheinlichkeitsschwelle, die im Voraus eingestellt werden;
Berechnen (103) einer ersten Farb-Likelihood-Wahrscheinlichkeit des Kopf-Schulter-Vordergrunds und einer zweiten Farb-Likelihood-Wahrscheinlichkeit des Hintergrunds gemäß Farbmerkmalsvektoren der Kopf-Schulter-Vordergrund-Sample-Pixel und Farbmerkmalsvektoren der Hintergrund-Sample-Pixel;
Berechnen (104) einer ersten A-posteriori-Wahrscheinlichkeit des Kopf-Schulter-Vordergrunds und einer zweiten A-posteriori-Wahrscheinlichkeit des Hintergrunds gemäß der A-priori-Wahrscheinlichkeit, der ersten Farb-Likelihood-Wahrscheinlichkeit und der zweiten Farb-Likelihood-Wahrscheinlichkeit; und
Durchführen (105) von Kopf-Schulter-Segmentierung an dem zu segmentierenden Bild gemäß einer ersten A-posteriori-Wahrscheinlichkeit und der zweiten A-posteriori-Wahrscheinlichkeit;

**dadurch gekennzeichnet, dass**

das Auswählen der Kopf-Schulter-Vordergrund-Sample-Pixel und der Hintergrund-Sample-Pixel aus dem zu segmentierenden Bid gemäß der A-priori-Wahrscheinlichkeit und der Kopf-Schulter-Vordergrund-Wahrscheinlichkeitsschwelle und der Hintergrund-Wahrscheinlichkeitsschwelle, die im Voraus eingestellt werden, Folgendes beinhaltet:
Identifizieren (202) eines Geschlechts des Gesichts in dem zu segmentierenden Bild, um ein Geschlechtsidentifikationsergebnis zu erhalten;
Bestimmen einer A-priori-Wahrscheinlichkeit entsprechend dem zu segmentierenden Bild gemäß dem Geschlechtsidentifikationsergebnis;
Bestimmen (203), mit Bezug auf jedes Pixel in dem zu segmentierenden Bild, ob die A-priori-Wahrscheinlichkeit des Pixels größer ist als die Kopf-Schulter-Vordergrund-Wahrscheinlichkeitsschwelle; wenn die A-priori-Wahrscheinlichkeit des Pixels größer ist als die Kopf-Schulter-Vordergrund-Wahrscheinlichkeitsschwelle, Bestimmen des Pixels als Vordergrund-Sample-Pixel; und
Bestimmen, mit Bezug auf jedes Pixel in dem zu segmentierenden Bild, ob die A-priori-Wahrscheinlichkeit des Pixels kleiner ist als die Hintergrund-Wahrscheinlichkeitsschwelle; wenn die A-priori-Wahrscheinlichkeit des Pixels kleiner ist als die Hintergrund-Wahrscheinlichkeitsschwelle, Bestimmen des Pixels als Hintergrund-Sample-Pixel.

2.  Verfahren nach Anspruch 1, wobei das Berechnen der A-priori-Wahrscheinlichkeit des Erscheinens in dem Kopf-Schulter-Vordergrund für jedes Pixel in dem Bild mit der voreingestellten Größe gemäß dem Positionierungsergebnis der externen Gesichtskonturpunkte Folgendes beinhaltet:

Auswählen einer voreingestellten Anzahl von Frontalgesichtsbildern von weiblichen Personen;
Erzeugen eines kalibrierten Kopf-Schulter-Bildes jedes Frontalgesichtsbildes einer weiblichen Person gemäß einem Kopf-Schulter-Vordergrund-Kalibrationsergebnis durch den Benutzer an jedem Frontalgesichtsbild einer weiblichen Person;
Positionieren von charakteristischen externen Gesichtskonturpunkten in jedem Frontalgesichtsbild einer weiblichen Person, um ein Positionierungsergebnis zu erhalten;
Durchführen von Ausrichtung und Größennormalisierung an jedem kalibrierten Kopf-Schulter-Bild gemäß dem Positionierungsergebnis der charakteristischen externen Gesichtkonturpunkte, um eine Mehrzahl von Bildern mit einer voreingestellten Größe zu erhalten; und
Berechnen, mit Bezug auf das Pixel an derselben Position in der Mehrzahl von Bildern mit der voreingestellten Größe, der A-priori-Wahrscheinlichkeit des Erscheinens in dem Kopf-Schulter-Vordergrund für das Pixel gemäß dem Kopf-Schulter-Vordergrund-Kalibrationsergebnis.

3.  Verfahren nach Anspruch 1, bei dem das Berechnen der A-priori-Wahrscheinlichkeit des Erscheinens in dem Kopf-Schulter-Vordergrund für jedes Pixel in dem Bild mit der voreingestellten Größe gemäß dem Positionierungsergebnis der externen Gesichtskonturpunkte Folgendes beinhaltet:

Auswählen einer voreingestellten Anzahl von Frontalgesichtsbildern von männlichen Personen;
Erzeugen eines kalibrierten Kopf-Schulter-Bildes jedes Frontalgesichtsbildes einer männlichen Person gemäß einem Kopf-Schulter-Vordergrundkalibrationsergebnis durch den Benutzer an jedem Frontalgesichtsbild einer männlichen Person;
Positionieren von charakteristischen externen Gesichtskonturpunkten jedes Frontalgesichtsbildes einer männlichen Person, um ein Positionierungsergebnis zu erhalten;
Durchführen von Ausrichtung und Größennormalisierung an jedem kalibrierten Kopf-Schulter-Bild gemäß dem Positionierungsergebnis der charakteristischen externen Gesichtskonturpunkte, um eine Mehrzahl von Bildern mit einer voreingestellten Größe zu erhalten; und
Berechnen, mit Bezug auf das Pixel in derselben Position in der Mehrzahl von Bildern mit einer voreingestellten Größe, der A-priori-Wahrscheinlichkeit des Erscheinens in dem Kopf-Schulter-Vordergrund für das Pixel gemäß dem Kopf-Schulter-Vordergrund-Kalibrationsergebnis.

4.  Verfahren nach Anspruch 2 oder 3, wobei das Berechnen der A-priori-Wahrscheinlichkeit des Erscheinens in dem Kopf-Schulter-Vordergrund für das Pixel gemäß dem Kopf-Schulter-Vordergrund-Kalibrationsergebnis die folgende Formel anwendet:

$$P(I_{(x_i,y_i)} = 1) = \frac{\sum_{j=1}^{N} I_{(x_i,y_i)}^{j}}{N}$$

wobei sich $P(I_{(x_i,y_i)} = 1)$ auf die A-priori-Wahrscheinlichkeit des Erscheinens im Kopf-Schulter-Vordergrund für das Pixel $(x_i, y_i)$ bezieht, $I_{(x_i,y_i)}^{j}$ sich auf das Kalibrationsergebnis für das Pixel $(x_i, y_i)$ im j-ten Bild bezieht, $I_{(x_i,y_i)}^{j} = 1$ anzeigt, dass das Pixel $(x_i, y_i)$ im j-ten Bild als der Kopf-Schulter-Vordergrund kalibriert wird, $I_{(x_i,y_i)}^{j} = 0$ anzeigt, dass das Pixel $(x_i, y_i)$ im j-ten Bild als Hintergrund kalibriert ist, und N sich auf die Anzahl der Frontalgesichtsbilder bezieht.

**5.** Verfahren nach einem vorherigen Anspruch, wobei das Berechnen der ersten Farb-Likelihood-Wahrscheinlichkeit des Kopf-Schulter-Vordergrunds und der zweiten Farb-Likelihood-Wahrscheinlichkeit des Hintergrunds gemäß den Farbmerkmalsvektoren der Kopf-Schulter-Vordergrund-Sample-Pixel und der Farbmerkmalsvektoren der Hintergrund-Sample-Pixel die folgende Formel anwendet:

$$P(\overline{(R,G,B)} \mid I_{(x_i,y_i)} = 1) = \sum_{j}^{N_F} w_j * \exp\left(-\frac{dist(\overline{(R,G,B)}, \overline{(R_j,G_j,B_j)})}{2*\beta_F}\right)$$

$$P(\overline{(R,G,B)} \mid I_{(x_i,y_i)} = 0) = \sum_{j}^{N_B} w_j * \exp\left(-\frac{dist(\overline{(R,G,B)}, \overline{(R_j,G_j,B_j)})}{2*\beta_B}\right)$$

wobei sich $\overline{(R_j,G_j,B_j)}$ auf einen Farbmerkmalsdetektor des j-ten Clustering-Centers bezieht, $P(\overline{(R,G,B)} \mid I_{(x_i,y_i)} = 1)$ sich auf die erste Farb-Likelihood-Wahrscheinlichkeit bezieht, $P(\overline{(R,G,B)} \mid I_{(x_i,y_i)} = 0)$ sich auf die zweite Farb-Likelihood-Wahrscheinlichkeit bezieht, $N_F$ sich auf eine Anzahl der Clustering-Center der Vordergrund-Sample-Pixel bezieht und $N_B$ sich auf eine Anzahl der Clustering-Center der Hintergrund-Sample-Pixel bezieht; $dist(\overline{(R,G,B)}, \overline{(R_j,G_j,B_j)})$ sich auf einen Euklidischen Abstand von dem Farbmerkmalsvektor $\overline{(R,G,B)}$ zu dem Clustering-Center $\overline{(R_j,G_j,B_j)}$ bezieht, $w_j$ sich auf ein Verhältnis zwischen der Anzahl der Sample-Pixel des j-ten Clustering-Centers und der Anzahl von Gesamt-Sample-Pixeln bezieht und ß sich auf einen mittleren Euklidischen Abstand zwischen den Farbmerkmalsvektoren von unterschiedlichen Clustering-Centern bezieht, die wie folgt definiert werden:

$$\beta_F = \frac{2}{N_F(N_F-1)} \sum_{i=1}^{N_F} \sum_{j=1,j\neq i}^{N_F} dist(\overline{(R_i,G_i,B_i)}, \overline{(R_j,G_j,B_j)})$$

$$\beta_B = \frac{2}{N_B(N_B-1)} \sum_{i=1}^{N_B} \sum_{j=1,j\neq i}^{N_B} dist(\overline{(R_i,G_i,B_i)}, \overline{(R_j,G_j,B_j)})$$

**6.** Verfahren nach einem der Ansprüche 1 bis 5, **dadurch gekennzeichnet, dass** zum Berechnen der A-posteriori-Wahrscheinlichkeit des Kopf-Schulter-Vordergrunds und der A-posteriori-Wahrscheinlichkeit des Hintergrunds gemäß der A-priori-Wahrscheinlichkeit, der ersten Farb-Likelihood-Wahrscheinlichkeit und der zweiten Farb-Likelihood-Wahrscheinlichkeit die folgende Formel angewendet wird:

$$P(I_{(x_i,y_i)} = 1 \mid \overline{(R,G,B)}) \propto P(I_{(x_i,y_i)} = 1) * P(\overline{(R,G,B)} \mid I_{(x_i,y_i)} = 1)$$

$$P(I_{(x_i,y_i)} = 0 \mid \overline{(R,G,B)}) \propto (1 - P(I_{(x_i,y_i)} = 1)) * P(\overline{(R,G,B)} \mid I_{(x_i,y_i)} = 0)$$

wobei sich $P(I_{(x_i,y_i)} = 1 \mid \overline{(R,G,B)})$ auf die A-posteriori-Wahrscheinlichkeit des Kopf-Schulter-Vordergrunds bezieht, und $P(I_{(x_i,y_i)} = 0 \mid \overline{(R,G,B)})$ sich auf die A-posteriori-Wahrscheinlichkeit des Hintergrunds bezieht.

7. Vorrichtung zum Segmentieren eines Bildes, wobei die Vorrichtung Folgendes umfasst:

ein A-priori-Wahrscheinlichkeit-Berechnungsmodul (301), konfiguriert zum Berechnen einer A-priori-Wahrscheinlichkeit des Erscheinens in einem Kopf-Schulter-Vordergrund für jedes Pixel in einem Bild mit einer voreingestellten Größe gemäß einem Positionierungsergebnis von externen Gesichtkonturpunkten;

ein Sample-Pixel-Auswahlmodul (302), konfiguriert zum Auswählen von Kopf-Schulter-Vordergrund-Sample-Pixeln und Hintergrund-Sample-Pixeln aus einem zu segmentierenden Bild gemäß der A-priori-Wahrscheinlichkeit, und einer Kopf-Schulter-Vordergrund-Wahrscheinlichkeitsschwelle und einer Hintergrund-Wahrscheinlichkeitsschwelle, die im Voraus eingestellt werden;

ein Farb-Likelihood-Wahrscheinlichkeit-Berechnungsmodul (303), konfiguriert zum Berechnen einer ersten Farb-Likelihood-Wahrscheinlichkeit des Kopf-Schulter-Vordergrunds und einer zweiten Farb-Likelihood-Wahrscheinlichkeit des Hintergrunds gemäß Farbmerkmalsvektoren der Kopf-Schulter-Vordergrund-Sample-Pixel und Farbmerkmalsvektoren der Hintergrund-Sample-Pixel;

ein A-posteriori-Wahrscheinlichkeit-Berechnungsmodul (304), konfiguriert zum Berechnen einer ersten A-posteriori-Wahrscheinlichkeit des Kopf-Schulter-Vordergrunds und einer zweiten A-posteriori-Wahrscheinlichkeit des Hintergrunds gemäß der A-priori-Wahrscheinlichkeit, der ersten Farb-Likelihood-Wahrscheinlichkeit und der zweiten Farb-Likelihood-Wahrscheinlichkeit; und

ein Bildsegmentierungsmodul (305), konfiguriert zum Durchführen einer Kopf-Schulter-Segmentierung an dem zu segmentierenden Bild gemäß der ersten A-posteriori-Wahrscheinlichkeit und der zweiten A-posteriori-Wahrscheinlichkeit;

**dadurch gekennzeichnet, dass** das Sample-Pixel-Auswahlmodul konfiguriert ist zum:

Identifizieren eines Geschlechts des Gesichts in dem zu segmentierenden Bild, um ein Geschlechtsidentifikationsergebnis zu erhalten;

Bestimmen einer A-priori-Wahrscheinlichkeit entsprechend dem zu segmentierenden Bild gemäß dem Geschlechtsidentifikationsergebnis;

Bestimmen, mit Bezug auf jedes Pixel in dem zu segmentierenden Bild, ob die A-priori-Wahrscheinlichkeit des Pixels größer ist als die Kopf-Schulter-Vordergrund-Wahrscheinlichkeitsschwelle, und wenn die A-priori-Wahrscheinlichkeit des Pixels größer ist als die Kopf-Schulter-Vordergrund-Wahrscheinlichkeitsschwelle, Bestimmen des Pixels als Vordergrund-Sample-Pixel; und

Bestimmen, mit Bezug auf jedes Pixel in dem zu segmentierenden Bild, ob die A-priori-Wahrscheinlichkeit des Pixels kleiner ist als die Hintergrund-Wahrscheinlichkeitsschwelle, und wenn die A-priori-Wahrscheinlichkeit des Pixels kleiner ist als die Hintergrund-Wahrscheinlichkeitsschwelle, Bestimmen des Pixels als Hintergrund-Sample-Pixel.

8. Vorrichtung nach Anspruch 8, wobei das A-priori-Wahrscheinlichkeit-Berechnungsmodul konfiguriert ist zum Auswählen einer voreingestellten Anzahl von Frontalgesichtsbildern von weiblichen oder männlichen Personen; Erzeugen eines kalibrierten Kopf-Schulter-Bildes jedes Frontalgesichtsbildes einer weiblichen Person oder jedes Frontalgesichtsbildes einer männlichen Person, gemäß einem Kopf-Schulter-Vordergrund-Kalibrationsergebnis durch den Benutzer an jedem Frontalgesichtsbild einer weiblichen Person oder an jedem Frontalgesichtsbild einer männlichen Person; Positionieren von charakteristischen externen Gesichtkonturpunkten in jedem Frontalgesichtsbild einer weiblichen Person oder in jedem Frontalgesichtsbild einer männlichen Person, um ein Positionierungsergebnis zu erhalten; Durchführen von Ausrichtung und Größennormalisierung an jedem kalibrierten Kopf-Schulter-Bild gemäß dem Positionierungsergebnis der externen Gesichtskonturpunkte, um eine Mehrzahl von Bildern mit einer vorbestimmten Größe zu erhalten; und Berechnen, mit Bezug auf das Pixel an derselben Position in der Mehrzahl von Bildern mit der voreingestellten Größe, der A-priori-Wahrscheinlichkeit des Erscheinens in dem Kopf-Schulter-Vordergrund für das Pixel gemäß dem Kopf-Schulter-Vordergrund-Kalibrationsergebnis.

9. Vorrichtung nach Anspruch 8, wobei das A-priori-Wahrscheinlichkeit-Berechnungsmodul die A-priori-Wahrscheinlichkeit des Erscheinens in dem Kopf-Schulter-Vordergrund für das Pixel durch Anwenden der folgenden Formel berechnet:

$$P(I_{(x_i,y_i)} = 1) = \frac{\sum_{j=1}^{N} I_{(x_i,y_i)}^{j}}{N}$$

wobei sich $P(I_{(x_i,y_i)} = 1)$ auf die A-priori-Wahrscheinlichkeit des Erscheinens im Kopf-Schulter-Vordergrund für das Pixel $(x_i,y_i)$ bezieht, $I_{(x_i,y_i)}^{j}$ sich auf das Kalibrationsergebnis für das Pixel $(x_i,y_i)$ im j-ten Bild bezieht, $I_{(x_i,y_i)}^{j} = 1$ anzeigt, dass das Pixel $(x_i,y_i)$ im j-ten Bild als der Kopf-Schulter-Vordergrund kalibriert wird, $I_{(x_i,y_i)}^{j} = 0$ anzeigt, dass das Pixel $(x_i,y_i)$ im j-ten Bild als Hintergrund kalibriert ist, und N sich auf die Anzahl der Frontalgesichtsbilder bezieht.

10. Vorrichtung nach einem der Ansprüche 7 bis 9, **dadurch gekennzeichnet, dass** das Farb-Likelihood-Wahrscheinlichkeit-Berechnungsmodul die erste Farb-Likelihood-Wahrscheinlichkeit des Kopf-Schulter-Vordergrunds und die zweite Farb-Likelihood-Wahrscheinlichkeit des Hintergrunds durch Anwenden der folgenden Formel berechnet:

$$P(\overline{(R,G,B)} \mid I_{(x_i,y_i)} = 1) = \sum_{j}^{N_F} w_j * \exp(-\frac{dist(\overline{(R,G,B)},\overline{(R_j,G_j,B_j)})}{2 * \beta_F})$$

$$P(\overline{(R,G,B)} \mid I_{(x_i,y_i)} = 0) = \sum_{j}^{N_B} w_j * \exp(-\frac{dist(\overline{(R,G,B)},\overline{(R_j,G_j,B_j)})}{2 * \beta_B})$$

wobei sich $\overline{(R_j,G_j,B_j)}$ auf einen Farbmerkmalsdetektor des j-ten Clustering-Centers bezieht, $P(\overline{(R,G,B)} \mid I_{(x_i,y_i)} = 1)$ sich auf die erste Farb-Likelihood-Wahrscheinlichkeit bezieht, $P(\overline{(R,G,B)} \mid I_{(x_i,y_i)} = 0)$ sich auf die zweite Farb-Likelihood-Wahrscheinlichkeit bezieht, $N_F$ sich auf eine Anzahl der Clustering-Center der Vordergrund-Sample-Pixel bezieht und $N_B$ sich auf eine Anzahl der Clustering-Center der Hintergrund-Sample-Pixel bezieht; $dist(\overline{(R,G,B)},\overline{(R_j,G_j,B_j)})$ sich auf einen Euklidischen Abstand von dem Farbmerkmalsvektor $\overline{(R,G,B)}$ zu dem Clustering-Center $\overline{(R_j,G_j,B_j)}$ bezieht, $w_j$ sich auf ein Verhältnis zwischen der Anzahl der Sample-Pixel des j-ten Clustering-Centers und der Anzahl von Gesamt-Sample-Pixeln bezieht und ß sich auf einen mittleren Euklidischen Abstand zwischen den Farbmerkmalsvektoren von unterschiedlichen Clustering-Centern bezieht, die wie folgt definiert werden:

$$\beta_F = \frac{2}{N_F(N_F-1)} \sum_{i=1}^{N_F} \sum_{j=1, j \neq i}^{N_F} dist(\overline{(R_i,G_i,B_i)},\overline{(R_j,G_j,B_j)})$$

$$\beta_B = \frac{2}{N_B(N_B-1)} \sum_{i=1}^{N_B} \sum_{j=1, j \neq i}^{N_B} dist(\overline{(R_i,G_i,B_i)},\overline{(R_j,G_j,B_j)})$$

11. Vorrichtung nach einem der Ansprüche 7 bis 10, **dadurch gekennzeichnet, dass** das A-posteriori-Wahrscheinlichkeit-Berechnungsmodul die A-posteriori-Wahrscheinlichkeit des Kopf-Schulter-Vordergrunds und die A-posteriori-Wahrscheinlichkeit des Hintergrunds durch Anwenden der folgenden Formel berechnet:

$$P(I_{(x_i,y_i)} = 1 \mid \overline{(R,G,B)}) \propto P(I_{(x_i,y_i)} = 1) * P(\overline{(R,G,B)} \mid I_{(x_i,y_i)} = 1)$$

$$P(I_{(x_i,y_i)} = 0 \,|\, \overrightarrow{(R,G,B)}) \propto (1 - P(I_{(x_i,y_i)} = 1)) * P(\overrightarrow{(R,G,B)} \,|\, I_{(x_i,y_i)} = 0)$$

wobei sich $P(I_{(x_i,y_i)} = 1 \,|\, \overrightarrow{(R,G,B)})$ auf die A-posteriori-Wahrscheinlichkeit des Kopf-Schulter-Vordergrunds bezieht, und $P(I_{(x_i,y_i)} = 0 \,|\, \overrightarrow{(R,G,B)})$ sich auf die A-posteriori-Wahrscheinlichkeit des Hintergrunds bezieht.

12. Vorrichtung zum Segmentieren eines Bildes, **dadurch gekennzeichnet, dass** die Vorrichtung Folgendes umfasst:

einen Prozessor; und
einen Speicher zum Speichern von von dem Prozessor ausführbaren Befehlen;

wobei der Prozessor zum Ausführen des Verfahrens nach einem der Ansprüche 1 bis 6 konfiguriert ist.

13. Computerprogrammprodukt, das bei Ausführung auf einem Prozessor eines Endgeräts ein Verfahren nach einem der Ansprüche 1 bis 6 ausführt.

**Revendications**

1. Procédé de segmentation d'une image, le procédé comprenant :

calculer (101) une probabilité a priori d'apparaître dans un premier plan de tête et épaules pour chaque pixel dans une image ayant une taille prédéfinie conformément à un résultat de positionnement de points de contour facial extérieur ;
sélectionner (102) des pixels échantillons de premier plan de tête et épaules et des pixels échantillons d'arrière-plan d'une image à segmenter conformément à la probabilité à priori, et un seuil de probabilité de premier plan de tête et épaules et un seuil de probabilité d'arrière-plan qui sont réglés d'avance ;
calculer (103) une probabilité de vraisemblance de première couleur du premier plan de tête et épaules et une probabilité de vraisemblance de deuxième couleur de l'arrière-plan conformément à des vecteurs de caractéristiques de couleurs des pixels échantillons de premier plan de tête et épaules et à des vecteurs de caractéristiques de couleurs des pixels échantillons d'arrière-plan ;
calculer (104) une première probabilité a posteriori du premier plan de tête et épaules et une deuxième probabilité a posteriori de l'arrière-plan conformément à la probabilité a priori, la probabilité de vraisemblance de première couleur et la probabilité de vraisemblance de deuxième couleur ; et
effectuer (105) la segmentation de tête et épaules sur l'image à segmenter conformément à la première probabilité a posteriori et à la deuxième probabilité a posteriori ;

**caractérisé en ce que** :

sélectionner les pixels échantillons de premier plan de tête et épaules et les pixels échantillons d'arrière-plan de l'image à segmenter conformément à la probabilité a priori, et le seuil de probabilité de premier plan de tête et épaules et le seuil de probabilité d'arrière-plan qui sont réglés d'avance, comprend ;
identifier (202) un genre du visage dans l'image à segmenter pour obtenir un résultat d'identification de genre ;
déterminer une probabilité a priori correspondant à l'image à segmenter conformément au résultat d'identification de genre ;
au sujet de chaque pixel dans l'image à segmenter, déterminer (203) si la probabilité a priori du pixel est plus grande que le seuil de probabilité de premier plan de tête et épaules ; si la probabilité a priori du pixel est plus grande que le seuil de probabilité de premier plan de tête et épaules, déterminer le pixel comme le pixel échantillon de premier plan ; et
au sujet de chaque pixel dans l'image à segmenter, déterminer si la probabilité a priori du pixel est plus petite que le seuil de probabilité d'arrière-plan ; si la probabilité a priori du pixel est plus petite que le seuil de probabilité d'arnère-plan, déterminer le pixel comme le pixel échantillon d'arnère-plan.

2. Procédé selon la revendication 1, dans lequel calculer la probabilité a priori d'apparaître dans le premier plan de tête et épaules pour chaque pixel dans l'image ayant la taille prédéfinie conformément au résultat de positionnement des points de contour facial extérieur, comprend :

sélectionner un nombre prédéfini d'images frontales de visages de femmes ;

générer une image calibrée de tête et épaules de chaque image frontale de visage de femme conformément à un résultat de calibrage de premier plan de tête et épaules par l'utilisateur sur chaque image frontale de visage féminin ;

positionner des points caractéristiques de contour facial extérieur dans chaque image frontale de visage féminin pour obtenir un résultat de positionnement ;

effectuer un alignement et une normalisation de taille sur chaque image calibrée de tête et épaules conformément au résultat de positionnement des points caractéristiques de contour facial extérieur pour obtenir un multiple d'images ayant une taille prédéfinie ; et

au sujet du pixel à la même position dans le multiple d'images ayant la taille prédéfinie, calculer la probabilité a priori d'apparaître dans le premier plan de tête et épaules pour le pixel conformément au résultat de calibrage de premier plan de tête et épaules.

**3.** Procédé selon la revendication 1, dans lequel le fait de calculer la probabilité a priori d'apparaître dans le premier plan de tête et épaules pour chaque pixel dans l'image ayant la taille prédéfinie conformément au résultat de positionnement des points de contour facial extérieur, comprend :

sélectionner un nombre prédéfini d'images frontales de visages d'hommes ;

générer une image calibrée de tête et épaules de chaque image frontale de visage d'homme conformément à un résultat de calibrage de premier plan de tête et épaules par l'utilisateur sur chaque image frontale de visage masculin ;

positionner des points caractéristiques de contour facial extérieur dans chaque image frontale de visage masculin pour obtenir un résultat de positionnement ;

effectuer un alignement et une normalisation de taille sur chaque image calibrée de tête et épaules conformément au résultat de positionnement des points caractéristiques de contour facial extérieur pour obtenir un multiple d'images ayant une taille prédéfinie ; et

au sujet du pixel à la même position dans le multiple d'images ayant une taille prédéfinie, calculer la probabilité a priori d'apparaître dans le premier plan de tête et épaules pour le pixel conformément au résultat de calibrage de premier plan de tête et épaules.

**4.** Procédé selon l'une quelconque des revendications 2 ou 3, dans lequel le fait de calculer la probabilité a priori d'apparaître dans le premier plan de tête et épaules pour le pixel conformément au résultat de calibrage de premier plan de tête et épaules applique une formule comme suit :

$$P(I_{(x_i,y_i)} = 1) = \frac{\sum_{j=1}^{N} I_{(x_i,y_i)}^{j}}{N}$$

où $P(I_{(x_i,y_i)} = 1)$ se rapporte à la probabilité a priori d'apparaître dans le premier plan de tête et épaules pour le pixel $(x_i, y_i)$, $I_{(x_i,y_i)}^{j}$ se rapporte au résultat de calibrage pour le pixel $(x_i, y_i)$ dans la $j^e$ image, $I_{(x_i,y_i)}^{j} = 1$ indique que le pixel $(x_i, y_i)$ dans la $j^e$ image est calibré comme le premier plan de tête et épaules, $I_{(x_i,y_i)}^{j} = 0$ indique que le pixel $(x_i, y_i)$ dans la $j^e$ image est calibré comme l'arrière-plan, et N se rapporte au nombre des images frontales de visages.

**5.** Procédé selon l'une quelconque des revendications précédentes, dans lequel le fait de calculer la probabilité de vraisemblance de première couleur du premier plan de tête et épaules et la probabilité de vraisemblance de deuxième couleur de l'arrière-plan conformément aux vecteurs de caractéristiques de couleurs des pixels échantillons de premier plan de tête et épaules et des vecteurs de caractéristiques de couleurs des pixels échantillons d'arrière-plan, applique une formule comme suit :

$$P(\overline{(R,G,B)} \mid I_{(x_i,y_i)} = 1) = \sum_{j}^{N_F} w_j * \exp(-\frac{dist(\overline{(R,G,B)}, \overline{(R_j,G_j,B_j)})}{2 * \beta_F})$$

$$P(\overline{(R,G,B)} \mid I_{(x_i,y_i)} = 0) = \sum_{j}^{N_B} w_j * \exp\left(-\frac{dist(\overline{(R,G,B)},\overline{(R_j,G_j,B_j)})}{2 * \beta_B}\right)$$

où $\overline{(R_j,G_j,B_j)}$ se rapporte à un vecteur de caractéristique de couleur du $J^e$ centre de regroupement $P(\overline{(R,G,B)} \mid I_{(x_i,y_i)} = 1)$ se rapporte à la probabilité de vraisemblance de première couleur, $P(\overline{(R,G,B)} \mid I_{(x_i,y_i)} = 0)$ se rapporte à la probabilité de vraisemblance de deuxième couleur, $N_F$ se rapporte à un nombre de centres de regroupement des pixels échantillons de premier plan de tête et épaules, et $N_B$ se rapporte à un nombre de centres de regroupement des pixels échantillons d'arrière-plan ; $dist(\overline{(R,G,B)},\overline{(R_j,G_j,B_j)})$ se rapporte à une distance euclidienne du vecteur de caractéristique de couleur $\overline{(R,G,B)}$ au centre de regroupement $\overline{(R_j,G_j,B_j)}$, $w_j$ se rapporte à un rapport du nombre de pixels échantillons du $j^e$ centre de regroupement au nombre de pixels échantillons totaux, et $\beta$ se rapporte à une distance euclidienne moyenne entre les vecteurs de caractéristiques de couleurs de différents centres de regroupement, qui sont définis comme suit :

$$\beta_F = \frac{2}{N_F(N_F - 1)} \sum_{i=1}^{N_F} \sum_{j=1, j \neq i}^{N_F} dist(\overline{(R_i,G_i,B_i)},\overline{(R_j,G_j,B_j)})$$

$$\beta_B = \frac{2}{N_B(N_B - 1)} \sum_{i=1}^{N_B} \sum_{j=1, j \neq i}^{N_B} dist(\overline{(R_i,G_i,B_i)},\overline{(R_j,G_j,B_j)})$$

6. Procédé selon l'une quelconque des revendications 1 à 5, **caractérisé en ce que**, le fait de calculer la probabilité a posteriori du premier plan de tête et épaules et la probabilité a posteriori de l'arrière-plan conformément à la probabilité a priori, la probabilité de vraisemblance de première couleur et la probabilité de vraisemblance de deuxième couleur, applique une formule comme suit :

$$P(I_{(x_i,y_i)} = 1 \mid \overline{(R,G,B)}) \propto P(I_{(x_i,y_i)} = 1) * P(\overline{(R,G,B)} \mid I_{(x_i,y_i)} = 1)$$

$$P(I_{(x_i,y_i)} = 0 \mid \overline{(R,G,B)}) \propto (1 - P(I_{(x_i,y_i)} = 1)) * P(\overline{(R,G,B)} \mid I_{(x_i,y_i)} = 0)$$

où $P(I_{(x_i,y_i)} = 1 \mid \overline{(R,G,B)})$ se rapporte à la probabilité a posteriori du premier plan de tête et épaules ; et $P(I_{(x_i,y_i)} = 0 \mid \overline{(R,G,B)})$ se rapporte à la probabilité a posteriori de l'arrière-plan.

7. Appareil destiné à la segmentation d'une image, l'appareil comprenant :

un module de calcul de probabilité a priori (301) configuré pour calculer une probabilité a priori d'apparaître dans un premier plan de tête et épaules pour chaque pixel dans une image ayant une taille prédéfinie conformément à un résultat de positionnement de points de contour facial extérieur ;
un module de sélection de pixels échantillons (302) configuré pour sélectionner des pixels échantillons de premier plan de tête et épaules et des pixels échantillons d'arrière-plan d'une image à segmenter conformément à la probabilité à priori, et un seuil de probabilité de premier plan de tête et épaules et un seuil de probabilité d'arrière-plan qui sont réglés d'avance ;
un module de calcul de probabilité de vraisemblance de couleur (303) configuré pour calculer une probabilité de vraisemblance de première couleur du premier plan de tête et épaules et une probabilité de vraisemblance de deuxième couleur de l'arrière-plan conformément à des vecteurs de caractéristiques de couleurs des pixels échantillons de premier plan de tête et épaules et à des vecteurs de caractéristiques de couleurs des pixels échantillons d'arrière-plan ;
un module de calcul de probabilité a posteriori (304) configuré pour calculer une première probabilité a posteriori du premier plan de tête et épaules et une deuxième probabilité a posteriori de l'arrière-plan conformément à la probabilité a priori, la probabilité de vraisemblance de première couleur et la probabilité de vraisemblance de deuxième couleur ; et

un module de segmentation d'image (305) configuré pour effectuer la segmentation de tête et épaules sur l'image à segmenter conformément à la première probabilité a posteriori et à la deuxième probabilité a posteriori ;

**caractérisé en ce que** le module de sélection de pixels échantillons est configuré pour :

identifier un genre du visage dans l'image à segmenter pour obtenir un résultat d'identification de genre ;
déterminer une probabilité a priori correspondant à l'image à segmenter conformément au résultat d'identification de genre ;
au sujet de chaque pixel dans l'image à segmenter, déterminer si la probabilité a priori du pixel est plus grande que le seuil de probabilité de premier plan de tête et épaules ; si la probabilité a priori du pixel est plus grande que le seuil de probabilité de premier plan de tête et épaules, déterminer le pixel comme le pixel échantillon de premier plan ; et
au sujet de chaque pixel dans l'image à segmenter, déterminer si la probabilité a priori du pixel est plus petite que le seuil de probabilité d'arrière-plan, et si la probabilité a priori du pixel est plus petite que le seuil de probabilité d'arrière-plan, déterminer le pixel comme le pixel échantillon d'arrière-plan.

8. Appareil selon la revendication 8, dans lequel le module de calcul de probabilité a priori est configuré pour sélectionner un nombre prédéfini d'images frontales de visages de femmes ou d'hommes ; générer une image calibrée de tête et épaules de chaque image frontale de visage de femme, ou de chaque image frontale de visage d'homme, conformément à un résultat de calibrage de premier plan de tête et épaules par l'utilisateur sur chaque image frontale de femme, ou sur chaque image frontale d'homme ; positionner des points caractéristiques de contour facial extérieur dans chaque image frontale de visage féminin, ou dans chaque image frontale de visage masculin, pour obtenir un résultat de positionnement ; effectuer un alignement et une normalisation de taille sur chaque image calibrée de tête et épaules conformément au résultat de positionnement des points de contour facial extérieur pour obtenir un multiple d'images ayant une taille prédéfinie ; et au sujet du pixel à la même position dans le multiple d'images ayant la taille prédéfinie, calculer la probabilité a priori d'apparaître dans le premier plan de tête et épaules pour le pixel conformément au résultat de calibrage de premier plan de tête et épaules.

9. Appareil selon la revendication 8, dans lequel le module de calcul de la probabilité a priori calcule la probabilité a priori d'apparaître dans le premier plan de tête et épaules pour le pixel en appliquant une formule comme suit :

$$P(I_{(x_i,y_i)} = 1) = \frac{\sum_{j=1}^{N} I_{(x_i,y_i)}^j}{N}$$

où $P(I_{(x_i,y_i)} = 1)$ se rapporte à la probabilité a priori d'apparaître dans le premier plan de tête et épaules pour le pixel $(x_i, y_i)$, $I_{(x_i,y_i)}^j = 1$ se rapporte au résultat de calibrage pour le pixel $(x_i, y_i)$ dans la $j^e$ image, $I_{(x_i,y_i)}^j = 1$ indique que le pixel $(x_i, y_i)$ dans la $j^e$ image est calibré comme le premier plan de tête et épaules, $I_{(x_i,y_i)}^j = 0$ indique que le pixel $(x_i, y_i)$ dans la $j^e$ image est calibré comme l'arrière-plan, et N se rapporte au nombre des images frontales de visages.

10. Appareil selon l'une quelconque des revendications 7 à 9, **caractérisé en ce que**, le module de calcul de probabilité de vraisemblance de couleur calcule la probabilité de vraisemblance de première couleur du premier plan de tête et épaules et la probabilité de vraisemblance de deuxième couleur de l'arrière-plan en appliquant une formule comme suit :

$$P(\overline{(R,G,B)} \mid I_{(x_i,y_i)} = 1) = \sum_j^{N_F} w_j * \exp(-\frac{dist(\overline{(R,G,B)},\overline{(R_j,G_j,B_j)})}{2 * \beta_F})$$

$$P(\overline{(R,G,B)} \mid I_{(x_i,y_i)} = 0) = \sum_j^{N_B} w_j * \exp(-\frac{dist(\overline{(R,G,B)},\overline{(R_j,G_j,B_j)})}{2 * \beta_B})$$

où $\overline{(R_j, G_j, B_j)}$ se rapporte à un vecteur de caractéristique de couleur du $J^e$ centre de regroupement, $P(\overline{(R,G,B)} \mid I_{(x_i,y_i)} = 0)$ se rapporte à la probabilité de vraisemblance de première couleur, $P(\overline{(R,G,B)} \mid I_{(x_i,y_i)} = 0)$ se rapporte à la probabilité de vraisemblance de deuxième couleur, $N_F$ se rapporte à un nombre de centres de regroupement des pixels échantillons de premier plan de tête et épaules, et $N_B$ se rapporte à un nombre de centres de regroupement des pixels échantillons d'arrière-plan ; $dist(\overline{(R,G,B)}, \overline{(R_j, G_j, B_j)})$ se rapporte à une distance euclidienne du vecteur de caractéristique de couleur $\overline{(R,G,B)}$ au centre de regroupement $\overline{(R_j, G_j, B_j)}$, $w_j$ se rapporte à un rapport du nombre de pixels échantillons du $j^e$ centre de regroupement au nombre de pixels échantillons totaux, et $\beta$ se rapporte à une distance euclidienne moyenne entre les vecteurs de caractéristiques de couleurs de différents centres de regroupement, qui sont définis comme suit :

$$\beta_F = \frac{2}{N_F(N_F - 1)} \sum_{i=1}^{N_F} \sum_{j=1, j \neq i}^{N_F} dist(\overline{(R_i, G_i, B_i)}, \overline{(R_j, G_j, B_j)})$$

$$\beta_B = \frac{2}{N_B(N_B - 1)} \sum_{i=1}^{N_B} \sum_{j=1, j \neq i}^{N_B} dist(\overline{(R_i, G_i, B_i)}, \overline{(R_j, G_j, B_j)})$$

11. Appareil selon l'une quelconque des revendications 7 à 10, **caractérisé en ce que**, le module de calcul de probabilité a posteriori calcule la probabilité a posteriori du premier plan de tête et épaules et la probabilité a posteriori de l'arrière-plan en appliquant une formule comme suit, comprenant :

$$P(I_{(x_i,y_i)} = 1 \mid \overline{(R,G,B)}) \propto P(I_{(x_i,y_i)} = 1) * P(\overline{(R,G,B)} \mid I_{(x_i,y_i)} = 1)$$

$$P(I_{(x_i,y_i)} = 0 \mid \overline{(R,G,B)}) \propto (1 - P(I_{(x_i,y_i)} = 1)) * P(\overline{(R,G,B)} \mid I_{(x_i,y_i)} = 0)$$

où $P(I_{(x_i,y_i)} = 1 \mid \overline{(R,G,B)})$ se rapporte à la probabilité a posteriori du premier plan de tête et épaules ; et $P(I_{(x_i,y_i)} = 0 \mid \overline{(R,G,B)})$ se rapporte à la probabilité a posteriori de l'arrière-plan.

12. Dispositif destiné à la segmentation d'une image, **caractérisé en ce que** le dispositif comprend :

un processeur ; et
une mémoire pour stocker des instructions exécutables par le processeur ;

dans lequel le processeur est configuré pour mettre en oeuvre le procédé selon l'une quelconque des revendications 1 à 6.

13. Produit de programme informatique, qui, lorsque exécuté sur un processeur d'un terminal, met en oeuvre un procédé selon l'une quelconque des revendications 1 à 6.

| Calculate a priori probability of appearing a head-shoulder foreground at each pixel in an image having a preset size according to a positioning result of exterior contour points of face | 101 |

| Select head-shoulder foreground sample pixels and background sample pixels from an image to be segmented according to the a priori probability, and a head-shoulder foreground probability threshold and a background probability threshold set in advance | 102 |

| Calculate a first color likelihood probability of the head-shoulder foreground and a second color likelihood probability of the background according to color feature vectors of the head-shoulder foreground sample pixels and color feature vectors of the background sample pixels | 103 |

| Calculate a first a posteriori probability of the head-shoulder foreground and a second a posteriori probability of the background according to the a priori probability, the first color likelihood probability and the second color likelihood probability | 104 |

| Perform head-shoulder segmentation on the image to be segmented according to the first a posteriori probability and the second a posteriori probability | 105 |

Fig. 1

Calculate a priori probability of appearing in a head-shoulder foreground at each pixel in an image having a preset size according to a positioning result of exterior contour points of face — 201

Identify a gender of the face in the image to be segmented to obtain a gender identification result; and determine a priori probability corresponding to the image to be segmented according to the gender identification result — 202

With respect to each pixel in the image to be segmented, determine whether the a priori probability of the pixel is larger than the head-shoulder foreground probability threshold; if the a priori probability of the pixel is larger than the head-shoulder foreground probability threshold, determine the pixel as the foreground sample pixel; and determining whether the a priori probability of the pixel is smaller than the background probability threshold; if the a priori probability of the pixel is smaller than the background probability threshold, determine the pixel as the background sample pixel — 203

Calculate a first color likelihood probability of the head-shoulder foreground and a second color likelihood probability of the background according to color feature vectors of the head-shoulder foreground sample pixels and color feature vectors of the background sample pixels — 204

Calculate a first a posteriori probability of the head-shoulder foreground and a second a posteriori probability of the background according to the a priori probability, the first color likelihood probability and the second color likelihood probability — 205

Perform head-shoulder segmentation on the image to be segmented according to the first a posteriori probability and the second a posteriori probability — 206

Fig. 2    2/5

Apparatus for Segmenting Image

Priori Probability
Calculation Module                    301

Sample Pixel Selection
Module                                 302

Color Likelihood
Probability Calculation
Module                                 303

Posteriori Probability
Calculation Module                     304

Image Segmentation
Module                                 305

Fig. 3

Fig. 4

**500**

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HAI XIN et al.** Human head-shoulder segmentation. *IEEE conference on automatic face and gesture recognition,* ISBN 978-1-4244-9140-7, 227-232